# EUROPEAN PATENT SPECIFICATION

(11) **EP 4 256 278 B1**
(45) Date of publication and mention of the grant of the patent: **11.11.2026**
(21) Application number: 21827446.2
(22) Date of filing: 06.12.2021
(51) Int. Cl.: G06Q 50/06, G01F 1/66

(54) **A METHOD, A COMPUTER PROGRAM AND A SYSTEM FOR MONITORING UTILIZATION OF INDIVIDUAL WATER APPLIANCES OF A COMMON WATER DISTRIBUTION SYSTEM**
VERFAHREN, COMPUTERPROGRAMM UND SYSTEM ZUR ÜBERWACHUNG DER VERWENDUNG EINZELNER WASSERGERÄTE EINES GEMEINSAMEN WASSERVERTEILUNGSSYSTEMS
PROCÉDÉ, PROGRAMME INFORMATIQUE ET SYSTÈME DE SURVEILLANCE D'UTILISATION D'APPAREILS INDIVIDUELS D'ALIMENTATION EN EAU D'UN SYSTÈME COMMUN DE DISTRIBUTION D'EAU

(30) Priority: 07.12.2020 SE 2051423
(43) Date of publication of application: 11.10.2023
(73) Proprietor: CleanGuard AB, 131 28 Nacka Strand (SE)
(72) Inventor: FRYKHOLM, Gustav, 118 30 Stockholm (SE); MAGNUSSON, Fredrik, 132 37 Saltsjö-boo (SE)
(74) Representative: Zacco Sweden AB
(86) International application number: PCT/SE2021/051208
(87) International publication number: WO 2022/124964

(56) References cited:
- US-A1- 2004 128 034
- US-A1- 2012 239 539
- US-A1- 2015 160 059
- US-B2- 10 732 069

## Description

### TECHNICAL FIELD

The present disclosure relates to a method, computer program and system for monitoring utilization of individual water appliances of a common water distribution system. More specifically, the disclosure relates to a method, a computer program and a system for monitoring utilization of individual water appliances of a common water distribution system as defined in the introductory parts of claim 1, claim 10 and claim 11.

### BACKGROUND ART

There are various types of systems and devices for monitoring fluid flow in water pipes, including mechanical flow metres, pressure-based metres, optical flow metres and ultrasonic flow metres. Most systems are intrusive systems, meaning that one or more components are installed within the water pipe where they interact with, and at least partially intercepts, the water flow.

Non-intrusive water flow monitoring systems have also been suggested, some of which utilizes one or more acoustic sensors that are attached to the outside of a pipe of the water distribution system where they register sounds and acoustic patterns indicative of water flow within the pipe.

US20120279315 discloses an apparatus suitable for being releasably affixed to a pipe or tap in a domestic water supply and designed to detect and quantify water flow in said water supply in order to inform the end user of water consumption. The apparatus measures vibrations induced by the water flow directly in the proximity of the tap. The amplitude of the vibrations are determined in order to discriminate between the presence or absence of water flow. The root mean square amplitude of the vibrations may be used to quantify the flow, e.g., by classifying the flow as no flow, small flow, moderate flow, or large flow.

US2015160059 discloses a system for estimating an individual water consumption of a plurality of devices supplied by a secondary fluid distribution network of a user. The system may comprise an electromechanical sensor, such as a MEMS microphone, applied against the outside wall of supply pipe. The system may use the acoustic waveform of a signal measured by the sensor in order to extract information characterising the individual consumption of at least part of the devices supplied by the secondary network.

US2016370216 discloses an acoustic water flow sensor where the spectral distribution of an acoustic signal is analysed together with the amplitude of the signal in order to determine if water is flowing in a shower.

US2019056255 discloses a device for monitoring the behaviour of a subject based on their usage of a plurality of fluid outlets of a fluid supply system in a building. The device may include a microphone for generating a monitored sound signal from a location where the water supply pipe enters a building. The device may further comprise a spectrum analysis system for detecting patterns in the frequency spectrum of the sound signal. Various parameters of the sound signal, such as a base frequency, an average amplitude, a total harmonic distortion value, a power spectral density, etc., can be mapped to one of a plurality of predefined events, such as a consumption process caused by a consumption unit such as a washing machine.

US2017089047 relates to a device and a system for observing a fluid flow rate within a pipe from a single observation location. The device comprises a sound detector affixed externally to the pipe, and an AD converter for converting detected sound generated by a fluid flowing in the pipe to digital data that is provided to a microprocessor for further processing. The microprocessor is programmed to score and categorize the digital data according to flow as a function of time, e.g., by employing a scoring algorithm which estimates volumetric water flow based on the sound data. Categorization may include flow-level categories (e.g., an ordinal scale for low to high fluid flow) as well as categories based on "flow signatures" to indicate the use of a particular device or use (e.g., toilet, shower, dishwasher, washing machine, sprinkler, etc.). The "flow signature" is based on the velocity and duration of the water flow in the pipe.

US20120239539 discloses a system for detecting and measuring fluid use at a plurality of consumption points by a single acoustic transducer located at a single metering point. The sensor detects acoustic signatures unique to the flow of the fluid as it passes through existing piping within the structure. The acoustic transducer is coupled directly or remotely to a computer processor, which analyses the acoustic signals from the transducer. The processor can differentiate, therefrom, fluid use at each consumption point in the structure.

While the above-mentioned systems according to prior art addresses some of the problems associated with intrusive water flow monitoring systems, they often fail to reliably identify the water-consuming appliances of a common water distribution system and/or the volume of water consumed by the respective water appliance. There is thus a need for an improved method of monitoring utilization of individual water appliances of a common water distribution system.

### SUMMARY

It is an object of the present disclosure to mitigate, alleviate or eliminate one or more of the above-identified deficiencies and disadvantages in the prior art and solve at least one of the above mentioned problems.

It is a particular object of the present disclosure to provide a method and means for identifying water-consuming water appliances in a common water distribution system using a non-intrusive, cost-efficient and robust technique.

Another object of the present disclosure is to provide a method and means for identifying individual water-consuming appliances among multiple water-consuming appliances in a common water distribution system, i.e., for identifying each water appliance among several water appliances in simultaneous use.

An additional object of the present disclosure is to provide a method and means for determining a volume of water consumed by each of the water appliances in the common water distribution system.

The invention is defined by the appended claims.

According to a first aspect of the present disclosure there is provided a method for monitoring utilization of individual water appliances of a common water distribution system, the method comprises
- determining, during a calibration process, an acoustic signature of each of a plurality of water appliances in the common water distribution system by, for each of the plurality of water appliances:
   i) registering, with an acoustic sensor attached to an outside of a pipe of the common water distribution system, an acoustic pattern caused by water consumption of the water appliance;
   ii) identifying at least a first prominent frequency of the acoustic pattern by applying a signal processing algorithm to the acoustic pattern, and
   iii) defining the acoustic signature of the water appliance as a frequency signature comprising the at least first prominent frequency of the acoustic pattern;
- registering, after the calibration process, with the acoustic sensor during simultaneous water consumption by multiple water appliances of the plurality of water appliances, a composite acoustic pattern caused by the simultaneous water consumption of the multiple water appliances, and
- identifying individual water-consuming water appliances among the multiple water appliances by comparing the composite acoustic pattern with the acoustic signatures of the plurality of water appliances.

By comparing the composite acoustic pattern with the predetermined acoustic signatures of the plurality of water appliances, frequencies corresponding to the prominent frequencies of the acoustic signatures of the simultaneously used water appliances can be identified in the composite acoustic pattern, thus allowing the individual water appliances to be identified.

According to some embodiments, the individual water-consuming water appliances are identified by identifying a plurality of prominent frequencies in the composite acoustic pattern, and comparing the identified prominent frequencies of the composite acoustic pattern with the prominent frequencies of the acoustic signatures of the plurality of water appliances.

By matching the prominent frequencies of the acoustic signatures of the plurality of water appliances against only the most prominent frequencies of the composite acoustic pattern instead of matching the prominent frequencies of the acoustic signatures against the full frequency spectrum of the composite acoustic pattern, a computational-friendly way of identifying the individual water appliances from the composite acoustic pattern is provided. Furthermore, in embodiments where the matching process is performed in a network node based on acoustic patterns registered by the acoustic sensor, bandwidth can be saved by performing the process of identifying prominent frequencies in the registered acoustic patterns locally and only transmitting the information indicative of the identified prominent frequencies to the network node.

According to some embodiments, step ii) involves identification of a plurality of prominent frequencies of the acoustic pattern, e.g., three to six prominent frequencies of the acoustic pattern, and step iii) involves definition of the acoustic signature of the water appliance as a frequency signature comprising the plurality of identified prominent frequencies of the acoustic pattern.

By defining an acoustic signature of each of the plurality of water appliances as a frequency signature comprising not only one prominent frequency but a plurality of prominent frequencies, the chances of identifying one or more of the prominent frequencies in the composite acoustic pattern are improved, thus providing for a more robust identification of individual water-consuming appliances among the multiple water appliances in simultaneous use.

According to some embodiments, the calibration process further comprises:
- comparing the acoustic signature of a first water appliance with the acoustic signature of at least a second water appliance, and
- adapting the signal processing algorithm and repeating step ii) for the first water appliance until at least a first unique prominent frequency that is different than the at least first prominent frequency of the acoustic signature of the at least second water appliance is identified in the acoustic pattern of the first water appliance.

Thus, if the comparison shows that the identified at least one prominent frequency of the acoustic signature is not unique, the signal processing algorithm for identification of at least one prominent frequency in the acoustic pattern is adapted to identify an additional prominent frequency of the acoustic pattern. This process may be repeated until at least one unique prominent frequency is found for each water appliance, thus generating a unique acoustic signature for each water appliance of the plurality of water appliances in the common water distribution system. This, in turn, facilitates identification of individual water-consuming appliances during simultaneous use of multiple water appliances. Furthermore, it facilitates and improves accuracy in determination of a water volume consumed by each water-consuming appliance among multiple water appliances in simultaneous use.

According to some embodiments, the signal processing algorithm is adapted to:
a) identify, in addition to the at least first prominent frequency of the acoustic pattern of the first water appliance, an additional prominent frequency of the acoustic pattern of the first water appliance;
b) compare the additional prominent frequency with the at least first prominent frequency of the acoustic signature of the at least second water appliance, and
c) repeat steps a) and b) until there is at least one identified prominent frequency of the acoustic pattern of the first water appliance that is different than the at least first prominent frequency of the acoustic pattern of the at least second water appliance.

Thus, the signal processing algorithm may be adapted to add another prominent frequency to the acoustic signature of the water appliance during the calibration process if it is found that previously identified prominent frequencies of the acoustic pattern are not unique in comparison with the acoustic signatures of other and previously calibrated water appliances in the common water distribution system. This is a quick and easily implementable way of ensuring uniqueness of the acoustic signatures of the water appliances.

According to the claimed invention, the step of identifying the at least first prominent frequency of the acoustic pattern involves identification of a plurality of prominent frequencies that are spaced apart in the frequency domain by at least a predefined minimum bandwidth or frequency range, the step of adapting the signal processing algorithm comprises increasing a frequency resolution of the signal processing algorithm by reducing the minimum bandwidth. Instead of, or in addition to, adding another prominent frequency of the acoustic pattern to the acoustic signature, the signal processing algorithm may hence be adapted to increase a resolution of identifiable prominent frequencies in the acoustic pattern, thereby improving the chances of finding unique prominent frequencies for the acoustic signatures.

Both the frequencies and the energy content of the acoustic pattern caused by water consumption of a water appliance are typically characteristic for the specific water appliance. The most decisive parameter for the energy content of the acoustic pattern registered by the acoustic sensor is the distance along the water distribution system between the water appliance and the acoustic sensor. The energy content of the acoustic pattern is hence, at least to some extent, indicative of the location of the water appliance in the common water distribution system. This information may be used to identify or to verify identification of individual water-consuming appliances among multiple water appliances in simultaneous use. The method may hence involve a step of taking an energy content of the composite acoustic pattern and the energy content of the acoustic signatures of the plurality of water appliances into account in the process of identifying the individual water-consuming water appliances. According to some embodiments, the method comprises identifying or verifying identification of the individual water-consuming water appliances among the multiple water appliances in simultaneous use by comparing an energy content of identified prominent frequencies of the composite acoustic pattern with an energy content of the prominent frequencies of the acoustic signatures of the plurality of water appliances.

The method may be adapted to take a temporal relationship of activation of the multiple water appliances into consideration in identification or verification of identification of the individual water-consuming appliances among the multiple water appliances in simultaneous use.

According to some embodiments, the step of registering the composite acoustic pattern may be preceded by a step of identifying a first water-consuming water appliance based on an acoustic pattern registered by the acoustic sensor during water consumption by the first water-consuming water appliance and an acoustic signature of the first water-consuming water appliance, whereby the step of identifying individual water-consuming water appliances among the multiple water appliances may comprise a step of identifying at least a second water-consuming water appliance among the multiple water appliances based on a relationship between the composite acoustic pattern and the acoustic signature of the first water-consuming appliance.

Likewise, the method may be adapted to take the temporal relationship of deactivation of the multiple water appliances into consideration in the identification of the individual water-consuming appliances among the multiple water appliances in simultaneous use.

According to some embodiments, the step of registering the composite acoustic pattern may be followed by a step of identifying a first water-consuming water appliance based on an acoustic pattern registered by the acoustic sensor during water consumption by the first water-consuming water appliance and an acoustic signature of the first water-consuming water appliance, whereby the step of identifying individual water-consuming water appliances among the multiple water appliances may comprise a step of identifying at least a second water-consuming water appliance among the multiple water appliances based on a relationship between the composite acoustic pattern and the acoustic signature of the first water-consuming appliance.

By using the temporal relationship of activation and/or deactivation of the individual water-consuming appliances in accordance with the above-described principles, the accuracy and robustness of the method may be significantly improved.

According to some embodiments, the method comprises determining a water volume consumed by each individual water-consuming water appliance of the multiple water appliances based on an energy content of at least one frequency in the composite acoustic pattern. Typically, the water volume consumed by each individual water-consuming water appliance is determined based on an energy content of the at least one prominent frequency of the acoustic signature of the water appliance in the composite acoustic pattern. The energy content of the at least one prominent frequency of a water appliance in the composite acoustic pattern is indicative of the flow of water originating from that particular water appliance and may be used in different ways to estimate the flow and hence the volume of water consumed by the water appliance.

In some embodiments, the water volume is determined based on a relationship between an energy content of the at least one prominent frequency of the acoustic signature of the water appliance and an energy content of a corresponding frequency in the composite acoustic pattern. For example, the water volume may be determined based on said relationship and a signature flow related to the energy content of the at least one prominent frequency of the acoustic signature of the water appliance.

By quantifying the water volume consumed by the individual water appliances, a user may be provided with information not only relating to a current use of water appliances but also information relating to the water volume consumed by each of the plurality of water appliances during a certain period of time, such as a day, a week, a month or a year.

According to some embodiments, the acoustic signature of each water appliance of the plurality of water appliances is determined based on an acoustic pattern caused by water consumption of the water appliance at a well-defined calibration flow rate, and the water volume consumed by each individual water-consuming appliance of the multiple water appliances is determined based on the calibration flow and a relationship between an energy content of the at least one prominent frequency of the acoustic signature of the water appliance and an energy content of a corresponding frequency in the composite acoustic pattern.

According to some embodiments, the method comprises generation of a report of water consumption of at least one water appliance of the plurality of water appliances. The report may be presented to a user, e.g., by causing the report to be presented on an electronic device of the user, such as a mobile phone or a personal computer.

The above-described method is typically a computer-implemented method that may be performed upon execution of a computer program by one or more processors of a system for monitoring utilization of individual water appliances of a common water distribution system.

Thus, according to a second aspect of the present disclosure there is provided a computer program comprising computer-readable instructions which, when executed by at least one processor of a system for monitoring utilization of individual water appliances of a common water distribution system, causes the at least one processor to perform the steps of:
- determining, during a calibration process, an acoustic signature of each of a plurality of water appliances in the common water distribution system by, for each of the plurality of water appliances:
   i) receiving an acoustic pattern caused by water consumption of the water appliance, registered by an acoustic sensor attached to an outside of a pipe of the common water distribution system;
   ii) identifying at least a first prominent frequency of the acoustic pattern by applying a signal processing algorithm to the acoustic pattern, and
   iii) defining the acoustic signature of the water appliance as a frequency signature comprising the at least first prominent frequency of the acoustic pattern;
- receiving, after the calibration process, a composite acoustic pattern caused by simultaneous water consumption of multiple water appliances of the plurality of water appliances, registered by the acoustic sensor during simultaneous water consumption of the multiple water appliances, and
- identifying individual water-consuming water appliances among the multiple water appliances by comparing the composite acoustic pattern with the acoustic signatures of the plurality of water appliances.

The computer program may further comprise instructions for causing the at least one processor of the system to perform any of, or any combination of, the method steps of the above described method.

The computer program may be a distributed computer program partly residing in the acoustic sensor and partly residing in a network server to which the acoustic sensor is communicatively connectable. The computer program may comprise several computer program components or applications configured to perform different steps of the above described method. For instance, the computer program may comprise a first program component or application for data analysis and data communication residing in the acoustic sensor, a second program component or application for data analysis and data communication residing in the network server, and a third program component or application in form of a client application for data presentation of data and interaction with a user, residing in an electronic device of the user. The client application may, for example, be realized in form of a mobile application (app) configured to be run on a mobile electronic device, such as a mobile phone or a tablet computer, or in form of a desktop application configured to be run on a laptop or desktop computer.

According to a third aspect of the present disclosure there is provided a computer program product comprising at least one computer-readable medium, such as a non-volatile memory, storing the above mentioned computer program.

According to a fourth aspect of the present disclosure there is provided a system for monitoring utilization of individual water appliances of a common water distribution system. The system comprises an acoustic sensor attached to an outside of a pipe of the common water distribution system, and at least one processor operatively coupled to the acoustic sensor. The at least one processor is configured to
- determine, during a calibration process, an acoustic signature of each of the plurality of water appliances in the common water distribution system by, for each of the plurality of water appliances:
   i) receiving an acoustic pattern caused by water consumption of the water appliance, registered by the acoustic sensor;
   ii) identifying at least a first prominent frequency of the acoustic pattern by applying a signal processing algorithm to the acoustic pattern, and
   iii) defining the acoustic signature of the water appliance as a frequency signature comprising the at least first prominent frequency of the acoustic pattern;
- receive a composite acoustic pattern caused by simultaneous use of multiple water appliances of the plurality of water appliances, registered by the acoustic sensor during simultaneous water consumption of the multiple water appliances, and
- identify individual water-consuming water appliances among the multiple water appliances by comparing the composite acoustic pattern with the acoustic signatures of the plurality of water appliances.

According to some embodiments, the at least one processor is configured to identify the individual water-consuming water appliances by identifying a plurality of prominent frequencies in the composite acoustic pattern, and comparing the identified prominent frequencies of the composite acoustic pattern with the prominent frequencies of the acoustic signatures of the plurality of water appliances.

According to some embodiments, step ii) involves identification of a plurality of prominent frequencies of the acoustic pattern, such as three to five prominent frequencies of the acoustic pattern, and step iii) involves definition of the acoustic signature of the water appliance as a frequency signature comprising the plurality of identified prominent frequencies of the acoustic pattern.

According to some embodiments, the at least one processor is configured, during the calibration process, to:
- compare the acoustic signature of a first water appliance with the acoustic signature of at least a second water appliance, and
- adapt the signal processing algorithm and repeat step ii) for the first water appliance until at least a first unique prominent frequency that is different than the at least first prominent frequency of the acoustic signature of the at least second water appliance is identified in the acoustic pattern of the first water appliance.

According to some embodiments, the at least one processor is configured to adapt the signal processing algorithm in order to:
a) identify, in addition to the at least first prominent frequency of the acoustic pattern of the first water appliance, an additional prominent frequency of the acoustic pattern of the first water appliance;
b) compare the additional prominent frequency with the at least first prominent frequency of the acoustic signature of the at least second water appliance, and
c) repeat steps a) and b) until there is at least one identified prominent frequency of the acoustic pattern of the first water appliance that is different than the at least first prominent frequency of the acoustic signature of the at least second water appliance.

According to some embodiments, the identification of the at least first prominent frequency of the acoustic pattern involves identification of a plurality of prominent frequencies that are spaced apart in the frequency domain by at least a predefined minimum bandwidth or frequency range, the at least one processor being configured to adapt the signal processing algorithm in order to increase a resolution of the signal processing algorithm by reducing the minimum bandwidth.

According to some embodiments, not being part of the subject matter of the appended claims, the at least one processor is configured to identify or verify identification of the individual water-consuming water appliances by comparing an energy content of the identified prominent frequencies in the composite acoustic pattern with an energy content of the prominent frequencies of the acoustic signatures of the plurality of water appliances.

According to some embodiments, not being part of the subject matter of the appended claims, when the at least one processor has identified a first water-consuming water appliance based on the acoustic pattern registered during use of the first water-consuming appliance only, the at least one processor may be configured to identify a second water-consuming appliance that is activated after activation of the first water-consuming water appliance based on a relationship between the composite acoustic pattern caused by simultaneous water consumption by the first and second water-consuming water appliances, and the acoustic signature of the first water-consuming water appliance.

According to some embodiments, not being part of the subject matter of the appended claims, when multiple water-consuming water appliances have been used simultaneously and all but a first water-consuming water appliance have been deactivated, the at least one processor may be configured to identify at least a second water-consuming appliance among the multiple water appliances retrospectively based on a relationship between the composite acoustic pattern caused by simultaneous water consumption by the first and second water-consuming water appliances, and the acoustic signature of the first water-consuming water appliance.

According to some embodiments, not being part of the subject matter of the appended claims, the at least one processor is configured to determine a water volume consumed by each individual water-consuming water appliance of the multiple water-consuming water appliances based on a relationship between an energy content of the at least one prominent frequency of the acoustic signature of the water appliance and an energy content of a corresponding frequency in the composite acoustic pattern. For example, the at least one processor may be configured to determine the water volume from said relationship and a signature flow related to the energy content of the at least one prominent frequency of the acoustic signature.

According to some embodiments, not being part of the subject matter of the appended claims, the at least one processor is configured to determine the acoustic signature of each water appliance of the plurality of water appliances based on an acoustic pattern caused by water consumption of the water appliance at a well-defined calibration flow rate, and to determine the water volume consumed by each individual water-consuming water appliance of the multiple water appliances based on a comparison of an energy content of the at least one prominent frequency of the acoustic signature of the water appliance and an energy content of a corresponding frequency in the composite acoustic pattern.

According to some embodiments, not being part of the subject matter of the appended claims, the at least one processor is configured to generate a report of water consumption of at least one water appliance of the plurality of water appliances. Effects and features of the second, third and fourth aspects are to a large extent analogous to those described above in connection with the first aspect. Also, it should be realized that embodiments mentioned in relation to the first aspect are largely compatible with the second, third and fourth aspects.

The present disclosure will become apparent from the detailed description given below. The detailed description and specific examples disclose preferred embodiments of the disclosure by way of illustration only. Those skilled in the art understand from guidance in the detailed description that changes and modifications may be made within the scope of the appended claims.

### BRIEF DESCRIPTIONS OF THE DRAWINGS

The above objects, as well as additional objects, features and advantages of the present disclosure, will be more fully appreciated by reference to the following illustrative and nonlimiting detailed description of example embodiments of the present disclosure, when taken in conjunction with the accompanying drawings, of which:
Figure 1 illustrates an exemplary embodiment of a system for monitoring utilization of individual water appliances of a common water distribution system;
Figures 2A and 2B illustrate an exemplary embodiment of an acoustic sensor attached to an outside of a pipe of the common water distribution system;
Figures 3A and 3B illustrate an exemplary embodiment of a network server, such as a webserver, for processing acoustic signals registered by the acoustic sensor;
Figures 4A and 4B illustrate an acoustic pattern registered by the acoustic sensor during water consumption by a first water appliance of the common water distribution system, and an acoustic signature of the first water appliance, determined based on the registered acoustic pattern;
Figures 5A and 5B illustrate an acoustic pattern registered by the acoustic sensor during water consumption by a second water appliance of the common water distribution system, and an acoustic signature of the first water appliance, determined based on the registered acoustic pattern;
Figure 6A illustrates a composite acoustic pattern registered by the acoustic sensor during simultaneous water consumption by the first and the second water appliances;
Figure 6B illustrates an acoustic signature of the composite acoustic pattern together with the acoustic signatures of the first and the second water appliances;
Figure 7 illustrates an exemplary graphical user interface of a client application for presenting information related to water consumption by the water appliances of the common water distribution system, and
Figure 8 illustrates an exemplary embodiment of a method for monitoring utilization of individual water appliances of a common water distribution system.
Figure 9 illustrates another exemplary embodiment of a method for monitoring utilization of individual water appliances of a common water distribution system.
Figure 10 illustrates yet another exemplary embodiment of a method for monitoring utilization of individual water appliances of a common water distribution system.

### DETAILED DESCRIPTION

The present disclosure will now be described with reference to the accompanying drawings, in which preferred example embodiments of the disclosure are shown. The disclosure may, however, be embodied in other forms and should not be construed as limited to the herein disclosed embodiments. The disclosed embodiments are provided merely to fully convey the scope of the disclosure to the skilled person.

It is to be understood that the terminology used herein is for purpose of describing particular embodiments only, and is not intended to be limiting. It should be noted that, as used in the specification and the appended claims, the articles "a", "an", "the", and "said" are intended to mean that there are one or more of the elements unless the context explicitly dictates otherwise. Thus, for example, reference to "a unit" or "the unit" may include several devices, and the like. Furthermore, the terms "comprising", "including", "containing" and similar wordings are intended to be open-ended transitional terms that do preclude the possibility of additional elements or steps.

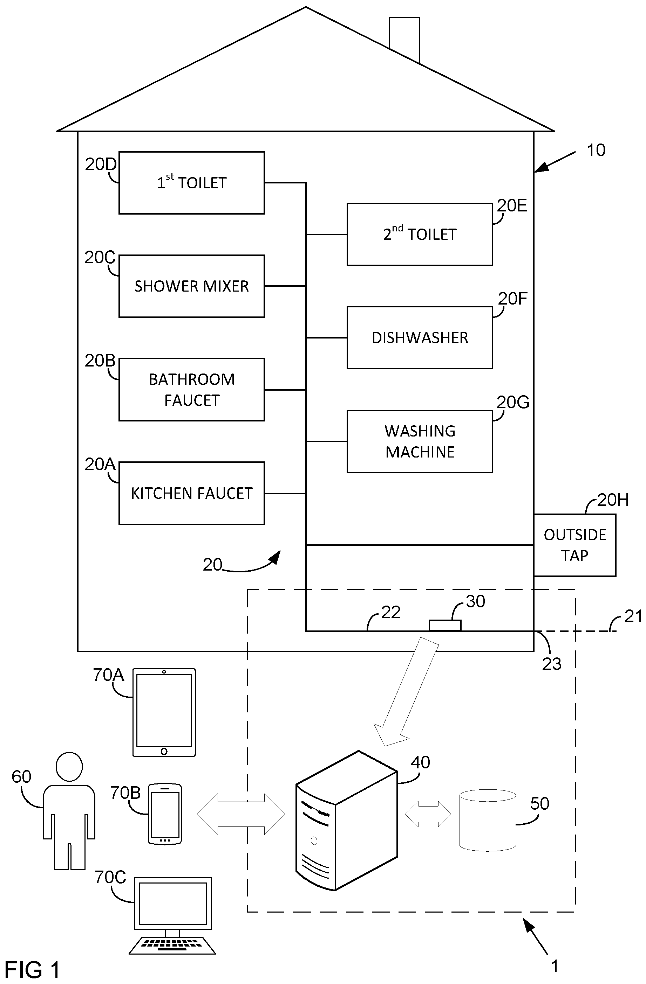

Figure 1 illustrates a system 1 for monitoring utilization of individual water appliances 20A-20H of a common water distribution system 20, according to an exemplary embodiment of the present disclosure.

The term "common water distribution system" as used herein refers to any type of water distribution system where a plurality, i.e., more than one, of water appliances are arranged downstream of a single inlet for the supply of water to the plurality of water appliances. The common water distribution system 20 may comprise pipes and tubing connecting the plurality of water appliances 20A-20H with a common pipe or pipeline 22 comprising a single inlet 21 of the common water distribution system. The pipes and tubing of the common water distribution system 20, including the common pipeline 22, may, for example, comprise copper pipes, plastic pipes, galvanized steel or iron pipes, or any combination thereof.

The common water distribution system 20 may be a water distribution system of a single household, a building accommodating multiple households, such as an apartment block, a factory, an agricultural estate, or any type of property comprising a plurality of water appliances that are supplied with water via a common pipeline.

The water appliances of the common water distribution system may be any type of water-consuming appliances, including but not limited to faucets, taps, toilets, shower and bathtub mixers, sprinklers and water-consuming electronic devices, such as water heaters, dishwashers, washing machines and ice making machines.

In the illustrated example, the common water distribution system 20 is a water distribution system of a building 10, such as a single-family house, comprising water appliances in form of a kitchen faucet 20A, a bathroom faucet 20B, a shower mixer 20C, a first toilet 20D, a second toilet 20E, a dishwasher 20F, a washing machine 20G and an outside tap 20H. The water appliances 20A-20H are connected to a common water pipeline 22, which may be a service line connecting the common water distribution system 20 with a water main (not shown). The common water distribution system 20 may comprise a water meter (not shown) for measuring a total volume of water consumed by the common water distribution system 20, and/or a service valve (not shown), sometimes referred to as a curb stop, for shutting off water supply to the common water distribution system 20. The water meter and the service valve are typically located somewhere along the common pipeline 22 and may, for instance, be located inside the building 10, at or close to a point of entry 23 into the building of the common pipeline 22.

The monitoring system 1 comprises an acoustic sensor 30 that is attached to an outside of the common pipeline 22 of the common water distribution system 20, at a point of measurement. The acoustic sensor 30 and hence the point of measurement may be located anywhere along the common water distribution system 20. For example, the acoustic sensor may be arranged at a point of measurement that is selected to minimize the average distance along the common water distribution system 20 between the acoustic sensor and the water appliances 20A-20H. In the illustrated embodiment, however, the acoustic sensor 30 is attached to the outside of the common pipeline 22 at a point of measurement that is located upstream of the plurality of water appliances 20A-20H. That the acoustic sensor 30 is located upstream of the plurality of water appliances 20A-20H means that water flow in the common water distribution system 20 passes by the acoustic sensor 30 before reaching the water appliances. The acoustic sensor 30 may, for example, be attached to the outside of the common pipeline 22, at or close to the point of entry 23 into the building of the common pipeline. The system 1 further comprises at least one processor that is configured to identify individual water-consuming water appliances (i.e., water appliances in current use) and, optionally, to quantify water consumption by the individual water appliances during simultaneous use of multiple water appliances, based on the acoustic signals registered by the acoustic sensor 30. The acoustic sensor 30 is a non-intrusive sensor which does not include any components that are arranged within the water pipe, and which does not interfere or interact with water flow within the pipe

As will be described in more detail below, the acoustic sensor 30 may be configured to register an acoustic pattern caused by water consumption by one or more of the water appliances 20A-20H, and to send information about the characteristics of the registered acoustic pattern to a network server 40, which characteristics comprise one or more prominent frequencies of the acoustic pattern. The network server 40 may in turn comprise logic for comparing the characteristics of the acoustic pattern with predetermined acoustic signatures of the plurality of water appliances 20A-20H in the common water distribution system 20, and for identifying a water appliance in current use, or multiple water appliances in simultaneous use, based on the comparison. The network server 40 may further comprise logic for determining the volume of water consumed by each of the one or more water appliances, based on the characteristics of the acoustic pattern and, in particular, the energy content of the prominent frequencies of the acoustic pattern.

The network server 40 may be configured to store data relating to, e.g., the water appliances 20A-20H, the acoustic signatures of the water appliances and the acoustic patterns registered by the acoustic sensor 30 in one or more databases 50, and to communicate information relating to utilization of the individual water appliances 20A-20H to a user 60, via one or more electronic devices 70A-70C to which the network server 40 is communicatively connectable.

The monitoring system 1 may be a "plug-and-play system" in the meaning of being fully operational to identify individual water-consuming appliances and quantifying the volume of water consumed by each water appliance of the plurality of water appliances 20A-20H without first being calibrated or trained to learn the acoustic signatures of the water appliances. However, to improve usability and accuracy of the system, the system may be configured to prompt the user 60 to perform a calibration process for calibrating the system 1, as will be described in more detail below.

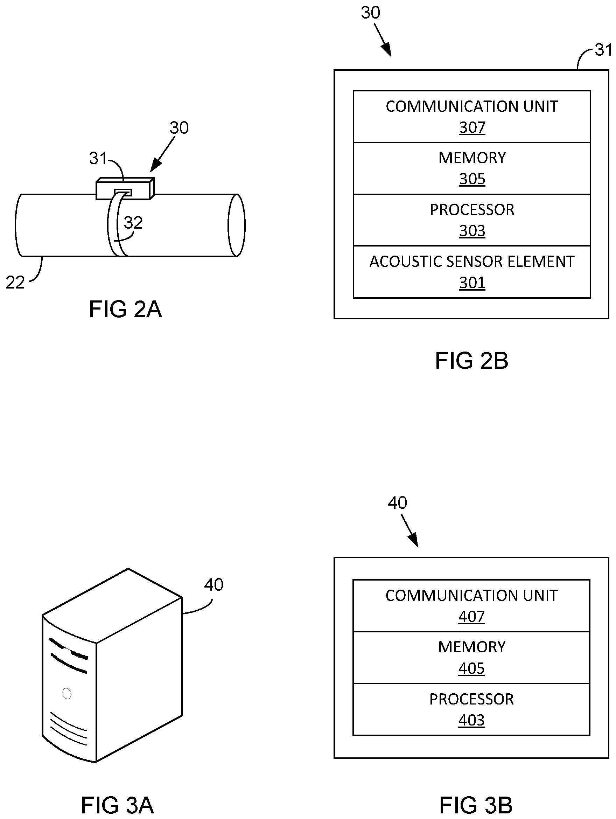

Figure 2A schematically illustrates an exemplary embodiment of the acoustic sensor 30, when attached to the outside of the common pipeline 22. The acoustic sensor 30 comprises a housing 31, such as plastic housing, which is detachably but securely attached to the common pipeline 22 by means of a strap 32. The strap 32 may be an elastic strap to ensure tight mechanical coupling between the sensor housing 31 and the pipeline 22.

Figure 2B illustrates some internal components of the acoustic sensor 30, including an acoustic sensor element 301, at least one processor 303, a memory 305, and a communication unit 307.

The acoustic sensor 30 is typically configured to be powered by mains electricity and may comprise an electrical cable and connector (not shown), such as a plug, for connection of the acoustic sensor 30 to a wall outlet. Instead of, or in addition to, a connector for connection of the acoustic sensor 30 to the mains, the acoustic sensor 30 may comprise an internal power source, e.g., a battery or battery pack, for powering the electric components of the acoustic sensor 30. Such an internal power source may also serve as a backup power system in case of a mains supply power outage or power failure.

The acoustic sensor element 301 is configured to register acoustic signals originating from water flow inside the pipe. The acoustic signals may manifest themselves in form of structure-borne sound or vibrations in the common pipe 22, which vibrations may be measured by the acoustic sensor 30. In some embodiments, the acoustic sensor element 301 may comprise a piezoelectric acoustic sensor element. In some embodiments, the acoustic sensor element 301 may be a contact microphone for registering structure-borne sound in the common pipe 22. In this case, the acoustic sensor 30 may be specifically adapted to provide for strong mechanical contact between the acoustic sensor element 301 and the structure of the common pipe 22. For example, the acoustic sensor element 301 may be arranged in physical contact with the inside of the sensor housing 31 in a region where the sensor housing makes physical contact with the outer surface of the common pipe 22 when the acoustic sensor 30 is attached to the outside of the pipe, as illustrated in figure 2A, while said region of the housing 31 is provided with a bulge or a protuberant part that protrudes outwardly from the sensor housing 31 to improve the physical contact between the acoustic sensor element 301 and the structure of the common pipe 22, via the sensor housing 31.

The operation of the acoustic sensor 30 is controlled by the at least one processor 303 of the acoustic sensor 30 upon execution of a computer program stored in the memory 305. The memory 305 of the acoustic sensor 30 may be integrated with or embedded into the at least one processor 303, or be a separate memory hardware device. The memory may include a random access memory (RAM), a read-only memory (ROM), a hard disk, an optical disk, a magnetic medium, a flash memory or any other mechanism capable of storing instructions or data. The at least one processor 303 may include any physical device having an electric circuit that performs logic operations on input data. For example, the at least one processor 303 may include one or more integrated circuits, microchips, microcontrollers, microprocessors, all or part of a central processing unit (CPU), digital signal processor (DSP), field-programmable gate array (FPGA), or other circuits for executing instructions or performing logic operations. Unless stated otherwise, it should be realized that actions and method steps described herein as being performed by the acoustic sensor 30 are performed by the at least one processor 303 of the acoustic sensor 30 upon execution of the computer program stored in the memory 305.

The communication unit 307 of the acoustic sensor 30 is configured to send information relating to the acoustic patterns registered by the acoustic sensor element 301 to one or more external devices. In some embodiments, the communication unit 307 may be configured for direct communication with end-user equipment, such as the electronic device 70A-70C of the user 60, illustrated in figure 1, e.g. via a wireless communications technology, such as Bluetooth or WiFi. In the illustrated embodiment, however, the communication unit 307 is configured to communicate information relating to the acoustic patterns registered by the acoustic sensor element 301 to the network server 40, which, for instance, may be a cloud server connected to the Internet. The communication unit 307 may be configured to communicate with the network server 40 using any known communications protocol.

Figures 3A and 3B illustrate the network server 40 and some internal components of the network server 40, including at least one processor 403, a memory 405, and a communication unit 407.

The memory 405 of the network server 40 stores a computer program for monitoring utilization of the individual water appliances 20A-20H based on the information relating to the registered acoustic patterns received by the network server from the acoustic sensor 30. The memory 405 of the network server 40 may be integrated with or embedded into the at least one processor 403, or be a separate memory hardware device. The memory may include a RAM, a ROM, a hard disk, an optical disk, a magnetic medium, a flash memory or any other mechanism capable of storing instructions or data. The at least one processor 403 of the network server 40 may include any physical device having an electric circuit that performs logic operations on input data. For example, the at least one processor 403 may include one or more integrated circuits, microchips, microcontrollers, microprocessors, all or part of a CPU, DSP, FPGA, or other circuits for executing instructions or performing logic operations. Unless stated otherwise, it should be realized that actions and method steps described herein as being performed by the network server 40 are performed by the at least one processor 403 of the network server upon execution of the computer program stored in the memory 405.

The communication unit 407 of the network server 40 is configured to receive information relating to the acoustic patterns registered by the acoustic sensor element 301 from the acoustic sensor 30, and to communicate information relating to consumption of water by the water appliances 20A-20H to the one or more electronic devices 70A-70C of the user 60. The communication unit 407 may be configured to communicate with the one or more electronic devices 70A-70C using any known communications protocol.

The computer program stored in the memory 405 of the network server 40 may be a server-side application of a distributed software for monitoring utilization of the water appliances 20A-20H. The software may further comprise a client application, such as a mobile application or app, residing in the one or more electronic devices 70A-70C.

### Water appliance calibration

The system 1 may be calibrated by the user 60 during a system setup procedure in order to increase the accuracy in identification of water-consuming water appliances and/or in the determination of the volume of water consumed by the individual water appliances. In one example, the user 60 may calibrate the system by "adding" water appliances and teaching the system to identify water-consuming water appliances through the client application running on the electronic device, e.g., via a mobile application running on the user's mobile phone 70B.

For example, the client application may be configured to prompt the user 60 to enter a name for a first water appliance on the electronic device and to activate the water appliance, e.g., by opening a tap of the water appliance. This is made in order for the acoustic sensor 30 to register an acoustic pattern originating from water consumption by the water appliance, which acoustic pattern may be used to define an acoustic signature of the water appliance for subsequent detection and measurement of water consumption by the water appliance.

Optionally, the user 60 may be prompted to set the water flow from the water appliance to correspond to a specific calibration flow, e.g., 10 liters per minute, or to let the water appliance deliver a certain volume of water, whereby the system 1 may calculate a calibration flow based on the volume of water and the time required for the water appliance to deliver the volume of water. This calibration flow may then be used by the system 1 to more accurately determine the volume of water consumed by each water appliance of the common water distribution system 20, as will be further described below.

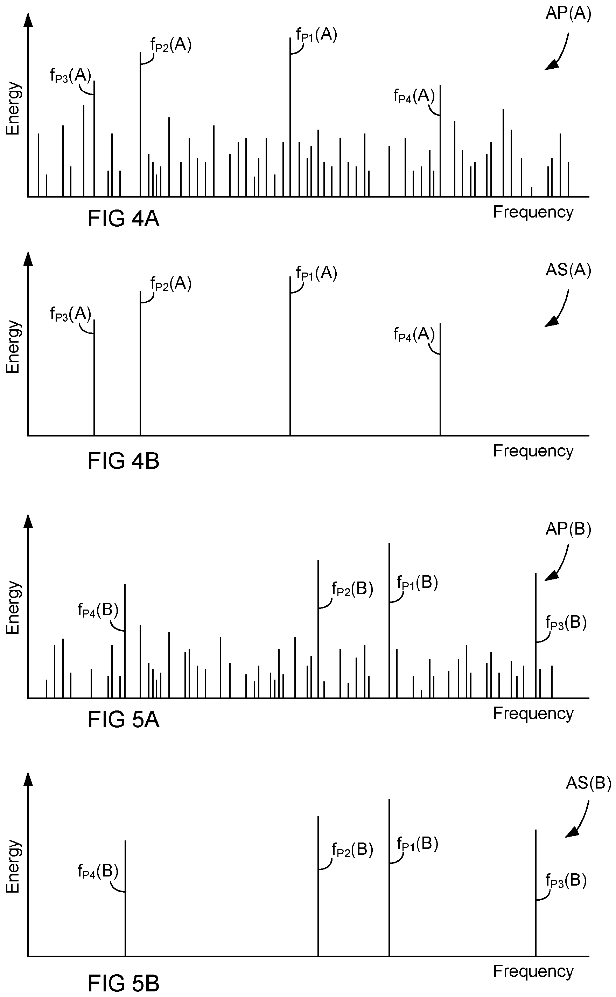

Figure 4A illustrates an acoustic pattern AP(A) registered by the acoustic sensor 30 after activation of a first water appliance of the plurality of water appliances 20A-20H illustrated in figure 1. The acoustic pattern AP(A) may, for example, be caused by water flow in the common pipe 22, originating from water consumption by kitchen faucet 20A during calibration of the system 1.

The acoustic pattern comprises a frequency spectrum of the acoustic signal registered by the acoustic sensor 30 during use of the first water appliance, and so carries information on the energy content of the acoustic signal for a number of frequencies. The frequencies and the energy contents of the frequencies in the spectrum depend on a number of parameters, including but not limited to the distance along the common water distribution system 20 between the acoustic sensor 30 and the water appliance, the geometry of the pipeline between the acoustic sensor and the water appliance, the geometry of the water appliance and the valve characteristics of the water appliance.

The acoustic pattern AP(A) may be registered by the acoustic sensor 30 through digitization by an analogue-to-digital (A/D) converter of analogue acoustic signals picked up by the acoustic sensor element 301, and a fast Fourier transform (FFT) algorithm for converting the acoustic signals to the frequency domain.

The acoustic sensor 30 may then be configured to identify one or more prominent frequencies f_{P1}(A)-f_{P4}(A) in the acoustic pattern, which prominent frequencies are substantially stable in the frequency domain. Typically, the acoustic sensor 30 is configured to identify a plurality of prominent frequencies f_{P1}(A)-f_{P4}(A). Typically, the acoustic sensor 30 is configured to identify 1-10 prominent frequencies, preferably 2-8 prominent frequencies and most preferably 3-6 prominent frequencies. In the illustrated example, the acoustic sensor 30 is configured to identify four prominent frequencies f_{P1}(A)-f_{P4}(A) of the acoustic pattern.

The term "prominent frequency" as used herein may encompass any readily distinguishable frequency of a frequency spectrum, and the at least one prominent frequency f_{P1}(A)-f_{P4}(A) of the acoustic pattern AP(A) may hence be any distinguishable frequency of the acoustic pattern. Typically, the at least one prominent frequency of the acoustic pattern is a frequency that is trusted to be characteristic in frequency and/or energy content for the particular water appliance. Typically but not necessarily, the at least one prominent frequency corresponds to at least one peak frequency of the acoustic pattern, i.e. to the at least one frequency having the highest energy content or amplitude among the frequencies of the acoustic pattern. In the illustrated example, the four prominent frequencies f_{P1}(A)-f_{P4}(A) correspond to four peak frequencies of the acoustic pattern AP(A).

The at least one prominent frequency f_{P1}(A)-f_{P4}(A) of the acoustic pattern AP(A) may be identified by the acoustic sensor 3 by applying a suitable signal processing algorithm to the registered acoustic pattern.

When the acoustic sensor 30 has identified the at least one prominent frequency f_{P1}(A)-f_{P4}(A) of the acoustic pattern AP(A), information identifying the at least one prominent frequency as well as information indicating the energy content (amplitude) of each of the one or more prominent frequencies are transmitted to the network server 40. In some embodiments, the acoustic sensor 30 may be configured to send the entire acoustic pattern AP(A), or a major part of the acoustic pattern to the network server 40 for subsequent identification of the at least one prominent frequency f_{P1}(A)-f_{P4}(A) by the network server. However, by including functionality for identifying the at least one prominent frequency of the acoustic pattern in the acoustic sensor 30, and transmitting nothing but information relating to the at least one prominent frequency, the amount of data sent from the acoustic sensor 30 to the network server 40 can be significantly reduced, thereby saving bandwidth and reducing powerconsumption by the acoustic sensor 30.

For the sake of simplicity, the acoustic sensor 30 will hereinafter be said to transmit the acoustic pattern to the network server 40. As is clear from the foregoing description, transmission of the acoustic pattern should, in this context, be interpreted as transmission of any information identifying at least the one or more prominent frequencies and the energy contents of the one or more prominent frequencies in the acoustic pattern.

The network server 40 is configured to define an acoustic signature of the first water appliance based on the acoustic pattern received from the acoustic sensor 30. The acoustic signature comprises information indicative of the at least one prominent frequency of the acoustic pattern registered for the water appliance. Preferably, the acoustic signature further comprises information indicative of the energy content of the at least one prominent frequency. Thus, the acoustic signature of the water appliance is a frequency signature that can be said to constitute a frequency spectrum of the one or more prominent frequencies of the acoustic pattern registered by the acoustic sensor 30 during water consumption by the water appliance.

Figure 4B illustrates an exemplary acoustic signature AS(A) of the first water appliance 20A. In this exemplary embodiment, the acoustic signature AS(A) is a frequency spectrum comprising the four prominent frequencies f_{P1}(A)-f_{P4}(A) of the acoustic pattern AP(A) illustrated in figure 4A. The acoustic signature AS(A) may be stored by the network server 40 in the database 50. The database 50 may be an internal database of the network server 40 or an external database residing in another network server or network node to which the network server 40 is communicatively connectable.

The storing of the acoustic signature AS(A) by the network server 40 involves the storing of information indicative of the at least one prominent frequency f_{P1}(A)-f_{P4}(A) of the acoustic signature AS(A), and preferably also information indicative of the energy content of the at least one prominent frequency.

Furthermore, the network server 40 may store information associating the energy content of the at least one prominent frequency f_{P1}(A)-f_{P4}(A) of the acoustic signature AS(A) with a flow value, hereinafter referred to as the signature flow of the acoustic signature, which signature flow represents the flow of water from the water appliance during determination of the acoustic signature AS(A). The signature flow may be used by the network server 1 to determine or quantify a flow of water from the first water appliance 20A during subsequent monitoring of water consumption by the plurality of water appliances 20A-20H, e.g., by calculating the flow based on the signature flow and a relationship between the energy content of the at least one prominent frequency f_{P1}(A)-f_{P4}(A) of the acoustic signature AS(A) and an energy content of at least one frequency corresponding to the at least one prominent frequency f_{P1}(A)-f_{P4}(A) in the acoustic pattern registered by the acoustic sensor 30.

The signature flow may be determined by the system 1 in different ways. For example, if the acoustic pattern AP(A) is registered during a calibration process employing a known and well-defined calibration flow from the first water appliance 20A, the system 1 may simply set the signature flow to correspond to the calibration flow.

However, a signature flow of the acoustic signature AS(A) may be determined by the system 1 also when not employing a well-defined calibration flow. For example, the user 60 may be prompted by the client application to calibrate the first water appliance 20A by opening the tap of the first water appliance to a minimum extent, an intermediate extent, and/or a maximum extent, whereby the network server 40 may be configured to associate the energy content of the at least one prominent frequency f_{P1}(A)-f_{P4}(A) of the acoustic signature AS(A) of the first water appliance with a signature flow that is determined by the network server based on the type of the first water appliance 20A and known (preprogrammed or automatically retrievable) information relating to a minimum, intermediate and/or maximum flow from that particular type of water appliance. The type of the water appliance may, for instance, be indicated by the user 60 via the client application when the water appliance is added by the user, and communicated to the network server 40 by the electronic device 70A-70C running the client application. Information relating to minimum, intermediate and/or maximum flows for different types of water appliances may be stored by the network server 40, e.g., in form of a look-up table. In other embodiments, the user may be prompted to estimate a minimum, intermediate and/or maximum flow of water from the first water appliance 20A, and to enter information representing the estimated minimum, intermediate and/or maximum flow into the system 1 via the client application.

Alternatively, the system 1 may be configured to determine or adjust the signature flow based on the energy content of acoustic patterns registered by the acoustic sensor 30 during the course of time. For example, the network server 40 may be configured to identify, over time, a minimum energy content, an intermediate energy content, and/or a maximum energy content of one or more recurring frequencies in acoustic patterns registered by the acoustic sensor 30, which one or more frequencies correspond to the at least one prominent frequency f_{P1}(A)-f_{P4}(A) of the acoustic signature AS(A) of the first water appliance 20A, and to compare the energy content of the at least one prominent frequency f_{P1}(A)-f _{P4}(A) of the stored acoustic signature AS(A) with the identified minimum, intermediate and/or maximum energy contents. The network server 40 may then use known information relating to a minimum, intermediate and/or maximum flow of the first water appliance 20A in order to calculate a signature flow for the acoustic signature AS(A), e.g., by using the above mentioned look-up table for transforming the minimum, intermediate and/or maximum energy content into a minimum, intermediate and/or maximum flow of the first water appliance 20A. In this way, the signature flow of the acoustic signature AS(A) may be retroactively determined by the system 1 without using any type of calibration flow.

Figure 5A illustrates an acoustic pattern AP(B) registered by the acoustic sensor 30 during use of a second water appliance of the plurality of water appliances 20A-20H illustrated in figure 1. The acoustic pattern AP(B) may, for example, be caused by water flow in the common pipe 22, originating from water consumption by bathroom faucet 20B.

The acoustic pattern AP(B) may, for example, be registered during the calibration procedure by prompting the user 60, via the client application, to close the tap of the first water appliance 20A for which an acoustic signature AS(A) has already been determined, and to add a second water appliance by entering a name and water appliance type into the client application, whereupon the user may be prompted to open the tap of the second water appliance for determination of an acoustic signature of the second water appliance 20B.

With reference now made to figure 5B, the system 1 may be configured to define and store an acoustic signature AS(B) of the second water appliance 20B based on the acoustic pattern AP(B) in figure 5A, in accordance with the above-described principles. For example, the system 1 may identify at least one prominent frequency f_{P1}(B)-f_{P4}(B) of the acoustic pattern AP(B), e.g., corresponding to four peak frequencies of the acoustic pattern, and to define and store an acoustic signature AS(B) of the second water appliance 20B, which acoustic signature may comprise information on the at least one identified prominent frequency and its energy content. As described above, the system 1 may further determine a signature flow to be associated with the energy content of the at least one prominent frequency f_{P1}(B)-f_{P4}(B) of the acoustic signature AS(B) for subsequent calculation of a volume of water consumed by the second water appliance 20B.

The above-described procedure of adding a water appliance and determining an acoustic signature of the water appliance may then be repeated for each of the plurality of water appliances 20A-20H in the common water distribution system 20.

Thus, during the calibration process, the system 1 may be configured to determine an acoustic signature of each of a plurality of water appliances 20A-20H in the common water distribution system 20 by, for each of the plurality of water appliances 20A-20H: i) registering, with the acoustic sensor 30, an acoustic pattern caused by water consumption of the water appliance, ii) identifying at least a first prominent frequency of the acoustic pattern by applying a signal processing algorithm to the acoustic pattern, and iii) defining the acoustic signature of the water appliance as a frequency signature comprising the at least first prominent frequency of the acoustic pattern and, optionally, the energy content of the at least first prominent frequency. The system 1 may further be configured to associate the energy content of the at least one prominent frequency of the acoustic signature with a signature flow indicative of a flow of water from the water appliance resulting in that specific energy content, which signature flow may be determined by the system in accordance with any of the above described principles.

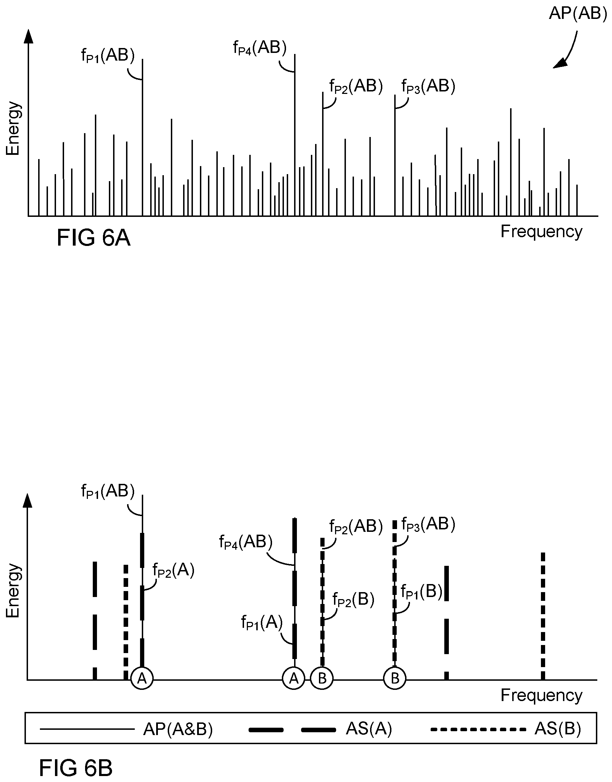

As will be described below with reference figures 6A and 6B, the system 1 may be configured to use the acoustic signatures of the plurality of water appliances 20A-20H to identify individual water-consuming water appliances during simultaneous water consumption by multiple water appliances, and to use the acoustic signatures and their associated signature flows to determine a volume of water consumed by the individual water-consuming appliances.

### Water appliance identification

With simultaneous reference made to previous drawings, figure 6A illustrates an acoustic pattern AP(AB) registered by the acoustic sensor 30 during monitoring of water consumption by the plurality of water appliances 20A-20H, taking place after the calibration process. The acoustic pattern AP(AB) is caused by simultaneous water consumption by multiple water appliances. In the illustrated example, the acoustic pattern AP(AB) is the result of simultaneous water consumption by the first 20A and the second 20B water appliance. An acoustic pattern registered during simultaneous use of multiple (i.e., two or more) water appliances is herein referred to as a composite acoustic pattern. The composite acoustic pattern AP(AB) resulting from simultaneous use of the first 20A and the second 20B water appliance typically comprises frequencies corresponding to the frequencies of the acoustic patterns AP(A) and AP(B) resulting from individual water consumption by the first 20A and the second 20B water appliance, and the energy contents of the frequencies of the composite acoustic pattern AP(AB) typically correspond to the sum of the energy contents of the corresponding frequencies in the acoustic patterns AP(A) and AP(B).

The system 1 is configured to identify the individual water-consuming water appliances 20A and 20B among the multiple water-consuming water appliances by comparing the composite acoustic pattern AP(AB) with the acoustic signatures of the plurality of water appliances 20A-20H in the common water distribution system 20. To this end, the system 1 may be configured to identify a plurality of prominent frequencies f_{P1}(AB)-f_{P4}(AB) in the composite acoustic pattern AP(AB), and compare the identified prominent frequencies of the composite acoustic pattern with the prominent frequencies of the acoustic signatures of the plurality of water appliances 20A-20H.

The acoustic sensor 30 may be configured to identify a plurality of prominent frequencies in the composite acoustic pattern AP(AB), which prominent frequencies are substantially stable in the frequency domain. Typically, the acoustic sensor 30 is configured to identify 2-10 prominent frequencies, and preferably 4-8 prominent frequencies of the composite acoustic pattern AP(AB). In the illustrated example, the acoustic sensor 30 is configured to identify four prominent frequencies f_{P1}(AB)-f_{P4}(AB) of the composite acoustic pattern. Typically, the signal processing algorithm employed by the acoustic sensor 30 for identification of prominent frequencies in the composite acoustic pattern AP(AB) is the same as for identification of prominent frequencies in the acoustic patterns registered during the calibration procedure. Therefore, the number of identified prominent frequencies in the composite acoustic pattern typically corresponds to the number of prominent frequencies in the acoustic signatures of the plurality of water appliances 20A-20H. However, in some embodiments, the acoustic sensor 30 may be configured to determine if a registered acoustic pattern is a composite acoustic pattern or an acoustic pattern caused by water consumption by a single water appliance, and, if the acoustic pattern is a composite acoustic pattern, to identify more prominent frequencies in the composite acoustic pattern than the number of prominent frequencies in the acoustic signatures of the plurality water appliances 20A-20H. This is advantageous in that it may facilitate identification of the individual water-consuming appliances. In one example, the acoustic sensor 30 is configured to determine a frequency density of the registered acoustic pattern, and to adapt the signal processing algorithm to identify more prominent frequencies should the frequency density of the registered acoustic pattern exceed a certain threshold value, indicating that the acoustic pattern is likely to be a composite acoustic pattern caused by simultaneous use of multiple water appliances. By identifying more prominent frequencies in the composite acoustic pattern than the number of prominent frequencies in the acoustic signatures, the chances of identifying all or more of the individual water-consuming water appliances among the multiple water-consuming water appliances are increased.

Once the plurality of prominent frequencies f_{P1}(AB)-f_{P4}(AB) of the composite acoustic pattern AP(AB) has been identified by the acoustic sensor 30, information relating to the identified frequencies and their energy contents is transmitted to the network server 40 for a matching process in which the network server compares the identified prominent frequencies f_{P1}(AB)-f_{P4}(AB) of the composite acoustic pattern with the prominent frequencies of the acoustic signatures of the plurality of water appliances 20A-20H. The matching process involves identification of at least one prominent frequency of the composite acoustic pattern AP(AB) that matches at least one prominent frequency of an acoustic signature of one of the water appliances. If at least one such prominent frequency is found in the composite acoustic pattern AP(AB), the network server 40 may conclude that "the matching" water appliance is one of the multiple water appliances in current use.

Figure 6B illustrates an example of a result of the matching process, from which the system 1 is capable of determining that the composite acoustic pattern AP(AB) illustrated in figure 6A results from simultaneous water consumption by the first 20A and the second 20B water appliances of the common water distribution system 20.

When the network server 40 compares the prominent frequencies f_{P1}(AB)-f_{P4}(AB) of the composite acoustic pattern AP(AB) with the acoustic signature AS(A) of the first water appliance 20A, it can be determined that a first prominent frequency f_{P1}(AB) of the composite acoustic pattern AP(AB) matches a first prominent frequency f_{P2}(A) of the acoustic signature AS(A) of the first water appliance 20A, and that a second prominent frequency f_{P4}(AB) of the composite acoustic pattern AP(AB) matches a second frequency f_{P1}(A) of the acoustic signature AS(A) of the first water appliance. Likewise, when the network server 40 compares the prominent frequencies f_{P1}(AB)-f_{P4}(AB) of the composite acoustic pattern AP(AB) with the acoustic signature AS(B) of the second water appliance 20B, it can be determined that a third prominent frequency f_{P2}(AB) of the composite acoustic pattern AP(AB) matches a first prominent frequency f_{P2}(B) of the acoustic signature AS(B) of the second water appliance 20B, and that a fourth prominent frequency f_{P3}(AB) of the composite acoustic pattern AP(AB) matches a second frequency f_{P1}(B) of the acoustic signature AS(B) of the second water appliance. Consequently, the matching process allows the network server 40 to conclude that the first water appliance 20A and the second water appliance 20B are both in current use.

In order to make water appliance identification more accurate and robust, the system 1 may be configured to ensure that the acoustic signatures of the plurality of water appliances 20A-20H are unique, meaning that at least one prominent frequency of each acoustic signature is different than the prominent frequencies of all other acoustic signatures.

According to some embodiments, in order to generate unique acoustic signatures for all water appliances 20A-20H, the system 1 may be configured to compare, after determination of an acoustic signature of a water appliance, the acoustic signature with previously determined acoustic signatures of other water appliances. If the acoustic signature is not unique, the system 1 may adapt the signal processing algorithm used for identification of the at least one prominent frequency and repeat the step of identifying at least a first prominent frequency of the acoustic pattern until at least one prominent frequency that is different than the prominent frequencies of all previously determined acoustic signatures is identified.

In some embodiments, the system 1 may be configured to adapt the signal processing algorithm such that an additional prominent frequency of the acoustic pattern is identified and added to the acoustic signature until the comparison shows that at least one prominent frequency of the acoustic signature is different than the prominent frequencies of all previously determined acoustic signature. The added prominent frequency may be the peak frequency that is "next in line", i.e., the peak frequency of the acoustic pattern when disregarding previously identified prominent frequencies.

Instead of, or in addition to, adding another prominent frequency of the acoustic pattern to the acoustic signature, the signal processing algorithm may be adapted to increase a resolution of allowable prominent frequencies in the acoustic signatures of the water appliance by reducing a predefined minimum difference in frequency between prominent frequencies. The acoustic sensor 30 is typically configured to identify discrete frequencies in the acoustic pattern by splitting the frequency spectrum of the registered acoustic signal into a plurality of frequency windows having a predefined bandwidth or frequency range, and treating all frequencies within a frequency window as one and the same frequency (e.g., determined as the median frequency of the frequency window) having an energy content corresponding to the sum of the energy contents of all frequencies within the frequency window. In some embodiments, the system 1 may be configured to adapt the signal processing algorithm such that the bandwidth or frequency range is reduced, thereby increasing the frequency resolution of the algorithm and thus the resolution of allowable prominent frequencies in the acoustic signatures. Increasing the resolution of allowable prominent frequencies in the acoustic signatures improves the chances of finding unique prominent frequencies for the acoustic signatures.

Besides facilitating identification of individual water-consuming appliances during simultaneous use of multiple water appliances, the uniqueness of at least one prominent frequency in each of the acoustic signatures facilitates and improves accuracy in determination of a water volume consumed by each individual water-consuming appliance among the multiple water appliances in simultaneous use, as will be described further below.

Instead or in addition to the capability of making the acoustic signatures of the water appliances 20A-20H unique, the system 1 may be configured to facilitate and/or improve identification of individual water-consuming appliances among multiple water-consuming water appliances by using information relating to the energy content of the composite acoustic pattern, and/or information relating to the points in time of activation and/or deactivation of individual water appliances.

In some embodiments, the system 1 may be configured to identify or verify identification of the individual water-consuming water appliances by comparing an energy content of identified prominent frequencies of the composite acoustic pattern with an energy content of the prominent frequencies of the acoustic signatures of the plurality of water appliances 20A-20H.

The energy content of any acoustic pattern registered by the acoustic sensor 30 is, inter alia, dependent on the distance(s) along the water distribution system 20 between the water appliance(s) in use and the acoustic sensor 30, and thus indicative of the location of the water appliance(s) in the common water distribution system 20. Therefore, for any given water appliance, the energy content of the at least one prominent frequency of its acoustic signature will depend not only on the flow rate (the signature flow) of water flowing from the water appliance during registration of the acoustic signature, but also on the distance along the water distribution system 20 between the water appliance and the acoustic sensor 30. In particular in situations where an identified water appliance has an acoustic signature that is similar to an acoustic signature of another water appliance of the plurality of water appliances 20A-20H in terms of prominent frequencies, it may be desired to verify that the correct water appliance has been identified by comparing the energy content of the at least one prominent frequency of the acoustic signature of the identified water appliance with the energy content of the at least one corresponding prominent frequency of the composite acoustic pattern. Should the comparison indicate that there is a major difference in energy content, the system 1 may be configured to repeat the step of identifying prominent frequencies in the composite acoustic pattern, possibly by adapting the signal processing algorithm used for identifying the at least one prominent frequency of the composite acoustic pattern. In this context, a major difference is a difference in energy content that cannot be explained by a difference in water flow from the identified water appliance at the point in time of determination of the acoustic signature and the point in time of registration of the composite acoustic pattern.

In some embodiments, the system 1 may be configured to determine a level of certainty of frequency-based identification of the individual water-consuming water appliance, and to take the energy content of the at least one prominent frequency of the acoustic signature of the identified water appliance and the energy content of the at least one corresponding prominent frequency of the composite acoustic pattern into account in the identification process only if the level of certainty is low.

In most situations of simultaneous use of water appliances, the water appliances will not be activated (i.e., the taps will not be opened) at the exact same point in time. Instead, one water appliance is likely to be activated before the other(s) and the system 1 may be configured to take the temporal relationship of activation of the multiple water appliances into consideration in identification or verification of identification of the individual water-consuming appliances.

For example, when a first water-consuming water appliance has been identified based on the acoustic pattern registered during use of the first water-consuming water appliance alone, a second water-consuming water appliance that is activated after activation of the first water-consuming water appliance may be identified based on a relationship between the composite acoustic pattern caused by simultaneous water consumption by the first and second water-consuming water appliances, and the acoustic signature of the first water-consuming water appliance. Thus, according to some embodiments, when the step of registering the composite acoustic pattern is preceded by identification of a first water-consuming water appliance, the step of identifying individual water-consuming water appliances among the multiple water appliances may comprise a step of identifying at least a second water-consuming water appliance among the multiple water appliances based on a relationship between the composite acoustic pattern and the acoustic signature of the first water-consuming appliance.

Likewise, in most situations of simultaneous use of water appliances, the water appliances will not be deactivated (i.e., the taps will not be closed) at the exact same point in time and the system 1 may be adapted to take the temporal relationship of deactivation of the multiple water appliances into consideration in the identification of the individual water-consuming appliances.

For example, when multiple water appliances have been used simultaneously and all but a first water-consuming water appliance have been deactivated, the first water-consuming water appliance may be identified based on the acoustic pattern registered by the acoustic sensor 30 after deactivation of the other water appliances. The system 1 may then identify at least a second water-consuming appliance among the multiple water appliances retroactively based on a relationship between the composite acoustic pattern caused by simultaneous water consumption by the first and the at least second water-consuming water appliances, and the acoustic signature of the first water-consuming water appliance. Thus, according to some embodiments, when the step of registering the composite acoustic pattern is followed by identification of a first water-consuming water appliance, the step of identifying individual water-consuming water appliances among the multiple water appliances may comprise a step of identifying at least a second water-consuming water appliance among the multiple water appliances based on a relationship between the composite acoustic pattern and the acoustic signature of the first water-consuming appliance.

By using the temporal relationship of activation and/or deactivation of the individual water-consuming appliances in accordance with the above-described principles, the accuracy and robustness of both water appliance identification and water volume consumption by individual water appliances may be substantially improved.

The system 1 may be configured to monitor the water consumption by the individual water appliances 20A-20H by detecting, defining and storing information related to different flow events based on the acoustic patterns registered by the acoustic sensor 30. For example, when the prominent frequencies f_{P1}(A)-f_{P4}(A) of the acoustic signature AS(A) of the first water appliance 20A are identified by the acoustic sensor 30 in an acoustic pattern registered by the sensor, transmission of the prominent frequencies f_{P1}(A)-f_{P4}(A) to the network server 40 may cause the network server to create a first flow event relating to water consumption by the first water appliance 20A. If, during water consumption by the first water appliance 20A, the second water appliance 20B is activated, the acoustic pattern registered by the acoustic sensor 30 will change into a composite acoustic pattern similar to the composite acoustic pattern AP(AB) illustrated in figure 6A. This will cause the acoustic sensor 30 to transmit the prominent frequencies f_{P1}(A)-f_{P4}(A) of the composite acoustic pattern to the network server 40, whereby the network server may create a new flow event relating to simultaneous water consumption by the first 20A and the second 20B water appliance. The network server 40 comprises a timer (not shown) for determining a start time and a stop time for each flow event. In this way, the system 1 may detect current use of individual water appliances of the common water distribution network 20, and determine and store information relating to times of use of individual water appliances.

### Water flow and volume determination

Besides the capability of the system 1 to detect current use of individual water appliances and times of use of the water appliances, the system 1 may be configured to determine and monitor the volume of water consumed by each water appliance 20A-20H of the common water distribution system 20.

As mentioned above, the energy content of an acoustic pattern caused by water consumption of a water appliance is indicative of the location of the water appliance in relation to the location of the acoustic sensor 30 registering the acoustic pattern. However, the energy content of the acoustic pattern is also indicative of the flow rate of water flowing from the water appliance. Thus, by determining the energy content of prominent frequencies in the acoustic patterns registered by the acoustic sensor 30, the flow rate of water flowing from the water appliances can be quantified. By integrating the quantified flow over time, the water volume consumed by the water appliances can also be quantified.

By quantifying the water flow and water volume consumed by the individual water appliances, the system 1 may provide the user 60 with information not only relating to current use of water appliances but also information relating to the flow of water from water appliances in current use, and the water volume consumed by each of the plurality of water appliances 20A-20H during a certain period of time, such as a day, a week, a month or a year.

During simultaneous water consumption by multiple water appliances, the system 1 may be configured to determine the water volume consumed by each individual water-consuming water appliance based on an energy content of frequencies in the composite acoustic pattern.

Typically, the water volume is determined based on an energy content of at least one prominent frequency of the composite acoustic pattern. For example, the system 1 may be configured to determine the water volume consumed by each individual water-consuming water appliance based on a relationship between an energy content of the at least one prominent frequency of the acoustic signature of the water appliance and an energy content of a corresponding frequency in the composite acoustic pattern.

As described above, in order to more accurately determine the water volume consumed by each water-consuming water appliance among the multiple water appliances in simultaneous use, the system 1 may further be configured to take a signature flow of the water-consuming water appliance into account in the volume determination, which signature flow is related to the energy content of the at least one prominent frequency of the acoustic signature of the water appliance. As also described above, the signature flow may, for example, correspond to a calibration flow from the water appliance during determination of the acoustic signature of the water appliance, or be retroactively determined by the system 1 based on the energy content of acoustic patterns registered by the acoustic sensor 30 during the course of time.

In one exemplary embodiment, the system 1 may be configured to determine a flow rate of water from each individual water-consuming water appliance among multiple water appliances in simultaneous use based on the signature flow of the water appliance and a relationship between an energy content of the at least one prominent frequency of the acoustic signature of the water appliance and an energy content of a corresponding frequency in the composite acoustic pattern registered by the acoustic sensor 30. The system 1 may further be configured to determine a volume of water consumed by the water appliance based on the determined flow and a time period for which the water consumption by the water appliance is to be determined. For example, the water consumed by a first water-consuming water appliance during a period of simultaneous use of multiple water-consuming water appliances may be determined based on the determined flow rate of the first water-consuming water appliance and a period of time during which the composite acoustic pattern is registered by the acoustic sensor 30, which period of time may correspond to the duration of a flow event as defined by the system 1.

An exemplary scenario in which the system 1 determines the volume of water consumed by the first water appliance 20A during simultaneous water consumption by the first 20A and second 20B water appliance of the common water distribution system 20 will now be described with reference to previous drawings.

With reference to figure 4B, the system 1 determines the acoustic signature AS(A) of the first water appliance 20A during the calibration process, and associates a signature flow with the energy content (i.e. amplitudes) of the prominent frequencies f_{P1}(A)-f_{P4}(A) of the acoustic signature AS(A). As described above, the signature flow may, for example, correspond to a well-defined calibration flow used during determination of the acoustic signature AS(A). With reference to figures 6A and 6B, the system 1 may then identify the first water appliance 20A as one of multiple water appliances in current use by identifying the prominent frequencies f_{P2}(A) and f_{P1}(A) of the acoustic signature AS(A) of the first water appliance 20A among the plurality of prominent frequencies in the composite acoustic pattern AP(AB) registered by the acoustic sensor 30 during current use of the first 20A and second 20B water appliances. The system 1 may then compare the amplitude of a first prominent frequency f_{P2}(A) of the acoustic signature AS(A) occurring in the composite acoustic pattern AP(AB) with the amplitude of the corresponding frequency f_{P4}(AB) in the composite acoustic pattern AP(AB), and/or compare the amplitude of a second prominent frequency f_{P1}(A) of the acoustic signature AS(A) occurring in the composite acoustic pattern AP(AB) with the amplitude of the corresponding frequency f_{P4}(AB) in the composite acoustic pattern AP(AB).

The first comparison shows that the amplitude of the prominent frequency f_{P2}(A) of the acoustic signature AS(A) of the first water appliance 20A is somewhat lower than the amplitude of the corresponding frequency f_{P1}(AB) of the composite acoustic pattern AP(AB), indicating that the current flow of water from the first water appliance 20A is somewhat higher than the signature flow of the first water appliance. A numerical value for the current flow of water from the first water appliance 20A may be calculated as the quotient of the amplitude of the frequency f_{P1}(AB) divided by the amplitude of the frequency f_{P2}(A), times the signature flow of the first water appliance 20A.

The second comparison, on the other hand, shows that the amplitude of the prominent frequency f_{P1}(A) of the acoustic signature AS(A) of the first water appliance 20A is substantially equal to the amplitude of the corresponding frequency f_{P4}(AB) of the composite acoustic pattern AP(AB), indicating that the current flow of water from the first water appliance 20A substantially equals the signature flow of the first water appliance.

In scenarios like this, where the result of amplitude comparisons between prominent frequencies of the acoustic signature and corresponding frequencies in the composite acoustic patterns differ from each other, the system 1 may advantageously be configured to weight amplitude comparisons where the amplitude of the frequency of the composite acoustic pattern is small in relation to the amplitude of the prominent frequency of the acoustic pattern higher than amplitude comparisons where the amplitude of the frequency of the composite acoustic pattern is high in relation to the amplitude of the prominent frequency of the acoustic pattern higher. This is advantageous due to the fact that non-prominent frequencies of the acoustic patterns AP(A) and AP(B) of the individual water appliances 20A and 20B may contribute to the energy content (i.e., amplitude) of the prominent frequencies f_{P1}(AB)-f_{P4}(AB) in the composite acoustic pattern AP(AB), which prominent frequencies are typically used for the comparisons. For example, in the illustrated example, the amplitude of the prominent frequency f_{P1}(AB) of the composite acoustic pattern comprises a rather big contribution from a non-prominent frequency of the acoustic signature AS(B) of the second water appliance 20B, which contribution would make flow determination based on the amplitude of the prominent frequency f_{P1}(AB) inaccurate. By weighting amplitude comparisons where the amplitude of the frequency of the composite acoustic pattern is small in relation to the amplitude of the prominent frequency of the acoustic pattern higher, the relation between the amplitude of the prominent frequency of the acoustic signature and the amplitude of the corresponding frequency in the composite acoustic pattern will correspond better to the relation between the signature flow and the current flow of the water appliance.

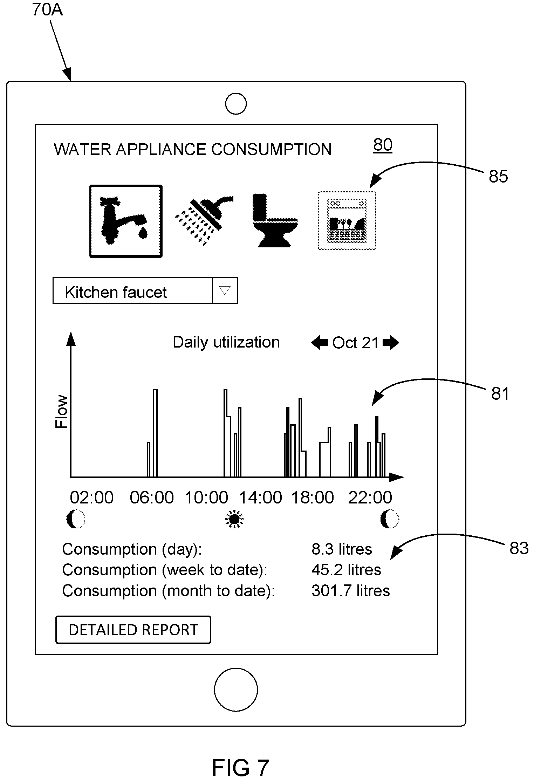

Figure 7 illustrates an exemplary user interface 80 for user interaction with the system 1. The exemplary user interface is a graphical user interface (GUI) of the above-mentioned client application running on the electronic device 70A. The client application may be a mobile application (app) that is downloadable to the electronic device 70A and configured to communicate with a server-side application residing in the network node 40. The client application may be configured to present a report comprising information related to water consumption by the water appliances 20A-20H of the common water distribution system 20 via the GUI. The client application may also be configured to enable the user 60 to enter information relating to the water appliances 20A-20H of the common water distribution system 20 into the client application for further distribution to the network server 40. For example, the client application may be configured to allow the user 60 to input information on water appliances to be "added" to the system 1 during a calibration process, as described above.

In the illustrated view of the GUI, the user 60 is presented with a report comprising information relating to daily utilization of the kitchen faucet corresponding to the first water appliance 20A. As illustrated in the drawing, this information may comprise a flow-time diagram 81 illustrating the flow of water from the kitchen faucet as a function of time. As also illustrated, the client application may be configured to present historical data 83 on the volume of water consumed by the kitchen faucet during a day, week, month or a year. In order to see a report for another water appliance, the user may select the water appliance via a water appliance selection pane 85 of the GUI, comprising icons and a drop down menu for water appliance selection by the user.

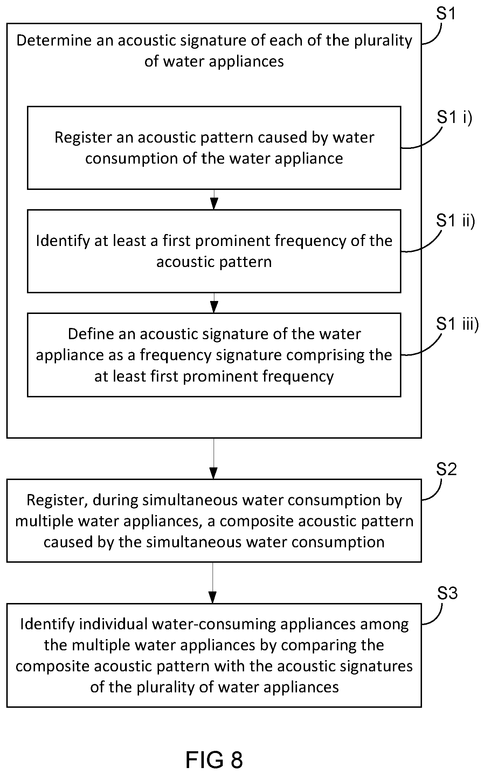

Figure 8 is a flow chart illustrating an exemplary embodiment of a method for monitoring utilization of individual water appliances of a common water distribution system. The method will be described below with simultaneous reference made to previous drawings.

In a first step, S1, taking place during the calibration process, an acoustic signature of each of the plurality of water appliances 20A-20H in the common water distribution system 20 is determined.

The determination in step S1 may comprise:
- a first substep S1 i) of registering, with an acoustic sensor 30 attached to an outside of a pipe 22 of the common water distribution system 20, an acoustic pattern AP(A), AP(B) caused by water consumption of the water appliance,
- a second substep S1 ii) of identifying at least a first prominent frequency f_{P1}(A)-f_{P4}(A), f_{P1}(B)-f_{P4}(B) of the acoustic pattern AP(A), AP(B) by applying a signal processing algorithm to the acoustic pattern, and
- a third substep S1 iii) of defining the acoustic signature of the water appliance as a frequency signature comprising the at least first prominent frequency of the acoustic pattern.

In a second step, S2, taking place after the calibration process, a composite acoustic pattern AP(AB) caused by simultaneous water consumption by multiple water-consuming water appliances of the plurality of water appliances 20A-20H is registered by the acoustic sensor 30.

In a third step, S3, individual water-consuming water appliances among the multiple water-consuming water appliances are identified by comparing the composite acoustic pattern AP(AB) with the acoustic signatures AS(A), AS(B) of the plurality of water appliances 20A-20H.

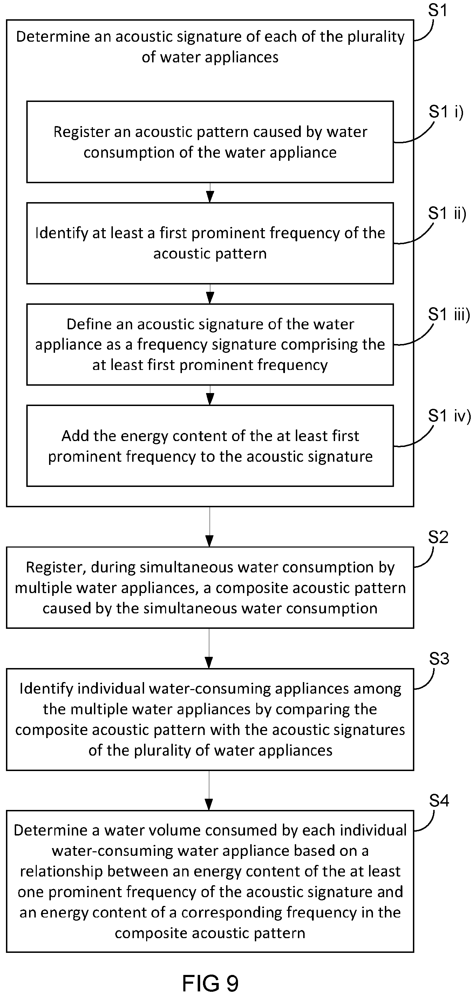

Figure 9 is a flow chart illustrating another exemplary embodiment of a method for monitoring utilization of individual water appliances of a common water distribution system.

The method differs from the method of figure 8 in that it comprises an additional step S4 of determining a water volume consumed by each individual water-consuming water appliance among the multiple water-consuming water appliances based on a relationship between an energy content of the at least one prominent frequency f_{P1}(A)-f_{P4}(A), f_{P1}(B)-f_{P4}(B) of the acoustic signature AS(A), AS(B) of the water appliance and an energy content of a corresponding frequency in the composite acoustic pattern AP(AB).

To this end, step S1 of determining an acoustic signature for each water appliance of the plurality of water appliances 20A-20H in the common water distribution system 20 comprises an additional substep S iv) of adding the energy content of the at least first prominent frequency to the acoustic signature.

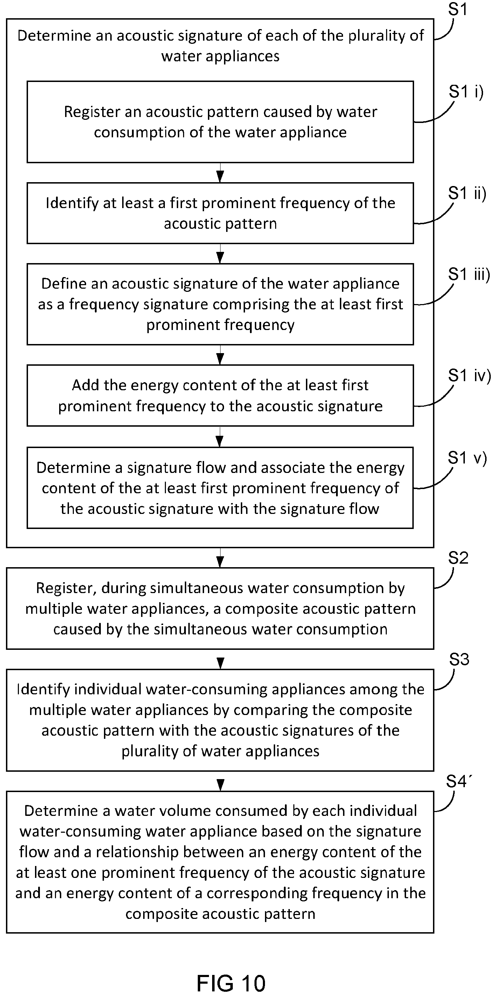

Figure 10 is a flow chart illustrating yet another exemplary embodiment of a method for monitoring utilization of individual water appliances of a common water distribution system.

The method differs from the method of figure 9 in that step S1 of determining acoustic signatures of the plurality of water appliances 20A-20H in the common water distribution system 20 comprises yet another additional substep S v) of determining a signature flow and associating the energy content of the at least first prominent frequency f_{P1}(A)-f_{P4}(A), f_{P1}(B)-f_{P4}(B) of the acoustic signature AS(A), AS(B) with the signature flow. As described above, the signature flow is a flow of water from the water appliance resulting in the energy content of the at least one prominent frequency in the acoustic signature. As also described above, the signature flow may be determined during the calibration process based on a well-defined or approximate calibration flow, or be determined retroactively based on energy contents of the at least one prominent frequency of the acoustic signature in the acoustic patterns registered by the acoustic sensor 30 during the course of time.

Furthermore, step S4 is replaced by a step S4' in which the determination of the water volume consumed by each individual water-consuming water appliance among the multiple water-consuming water appliances is made based on the relationship between the energy content of the at least one prominent frequency f_{P1}(A)-f_{P4}(A), f_{P1}(B)-f_{P4}(B) of the acoustic signature AS(A), AS(B) of the water appliance and the energy content of a corresponding frequency in the composite acoustic pattern AP(AB), and the signature flow determined in step S v).

As clear from the foregoing description, the method is typically a computer-implemented method performed by one or more processors of the system 1 upon execution of a computer program. As also clear from the foregoing description, the computer program may be a distributed computer program comprising program components residing in both the acoustic sensor 30 and the network server 40. The method may hence be performed by both the processor 303 of the acoustic sensor 30 and the processor 403 of the network server 40.

However, the person skilled in the art realizes that the present disclosure is not limited to the embodiments described above. The person skilled in the art further realizes that modifications and variations are possible within the scope of the appended claims. For example, it should be realized that all or some of the functionality described herein as residing in the network node 40 may, in other embodiments, reside in the acoustic sensor 30. In yet other embodiments, all or some of the functionality described herein as residing in the network node 40 may reside in a client device in direct communication with the acoustic sensor 30, such as the electronic device 70A-70C. Consequently, it should be realized that the system 1 is not limited to any particular system configuration or system topology encompassed by the appended claims.

## Claims

1. A method for monitoring utilization of individual water appliances (20A-20H) of a common water distribution system (20), the method comprises
- determining (S1), during a calibration process, an acoustic signature (AS(A), AS(B)) of each of a plurality of water appliances (20A-20H) in the common water distribution system (20) by, for each of the plurality of water appliances (20A-20H):
i) registering (S1 i), with an acoustic sensor (30) attached to an outside of a pipe (22) of the common water distribution system (20), an acoustic pattern (AP(A), AP(B)) caused by water consumption of the water appliance (20A-20H);
ii) identifying (S1 ii) at least a first prominent frequency (f_{P1}(A)-f_{P4}(A), f_{P1}(B)-f_{P4}(B)) of the acoustic pattern (AP(A), AP(B)) by applying a signal processing algorithm to the acoustic pattern (AP(A), AP(B)), and
iii) defining (S1 iii) the acoustic signature (AS(A), AS(B)) of the water appliance (20A-20H) as a frequency signature comprising the at least first prominent frequency (f_{P1}(A)-f_{P4}(A), f_{P1}(B)-f_{P4}(B)) of the acoustic pattern (AP(A), AP(B));
- registering (S2), with the acoustic sensor (30) during simultaneous water consumption by multiple water appliances (20A-20H) of said plurality of water appliances (20A-20H), a composite acoustic pattern (AP(AB)) caused by the simultaneous water consumption of the multiple water appliances (20A-20H), and
- identifying (S3) individual water-consuming water appliances (20A-20H) among the multiple water appliances (20A-20H) by comparing the composite acoustic pattern with the acoustic signatures (AS(A), AS(B)) of the plurality of water appliances (20A-20H),
wherein the individual water-consuming water appliances (20A-20H) are identified by identifying a plurality of prominent frequencies (f_{P1}(AB)-f_{P4}(AB)) in the composite acoustic pattern (AP(AB)), and comparing the identified prominent frequencies (f_{P1}(AB)-f_{P4}(AB)) of the composite acoustic pattern (AP(AB)) with the prominent frequencies (f_{P1}(A)-f_{P4}(A), f_{P1}(B)-f_{P4}(B)) of the acoustic signatures (AS(A), AS(B)) of the plurality of water appliances (20A-20H), and
wherein step ii) involves identification of a plurality of prominent frequencies (f_{P1}(A)-f_{P4}(A), f_{P1}(B)-f_{P4}(B)) of the acoustic pattern (AP(A), AP(B)) and step iii) involves definition of the acoustic signature (AS(A), AS(B)) of the water appliance (20A-20H) as a frequency signature comprising the plurality of identified prominent frequencies (f_{P1}(A)-f_{P4}(A), f_{P1}(B)-f_{P4}(B)) of the acoustic pattern (AP(A), AP(B)),
the calibration process further comprising:
- comparing the acoustic signature (AS(A), AS(B)) of a first water appliance with the acoustic signature (AS(A), AS(B)) of at least a second water appliance, and
- adapting the signal processing algorithm and repeating step ii) for the first water appliance until at least a first unique prominent frequency that is different than the prominent frequencies of the acoustic signature (AS(A), AS(B)) of the at least second water appliance is identified in the acoustic pattern (AP(A), AP(B)) of the first water appliance.

2. The method of claim 1, wherein the signal processing algorithm is adapted to:
a) identify, in addition to the plurality of prominent frequencies (f_{P1}(A)-f_{P4}(A), f_{P1}(B)-f_{P4}(B)) of the acoustic pattern (AP(A), AP(B)) of the first water appliance (20A-20H), an additional prominent frequency of the acoustic pattern (AP(A), AP(B)) of the first water appliance;
b) compare the additional prominent frequency with the prominent frequencies of the acoustic signature (AS(A), AS(B)) of the at least second water appliance, and
c) repeat steps a) and b) until there is at least one identified prominent frequency of the acoustic pattern (AP(A), AP(B)) of the first water appliance that is different than the prominent frequencies of the acoustic signature (AS(A), AS(B) of the at least second water appliance.

3. The method of claim 1, wherein the step of identifying the plurality of prominent frequencies (f_{P1}(A)-f_{P4}(A), f_{P1}(B)-f_{P4}(B)) of the acoustic pattern (AP(A), AP(B)) involves identification of a plurality of prominent frequencies that are spaced apart in the frequency domain by at least a predefined minimum bandwidth, the step of adapting the signal processing algorithm comprises increasing a resolution of the signal processing algorithm by reducing said minimum bandwidth.

4. The method of any of the preceding claims, further comprising
- identifying or verifying identification of the individual water-consuming water appliances (20A-20H) by comparing an energy content of the identified prominent frequencies (f_{P1}(AB)-f_{P4}(AB)) in the composite acoustic pattern (AP(AB)) with an energy content of the prominent frequencies (f_{P1}(A)-f_{P4}(A), f_{P1}(B)-f_{P4}(B)) of the acoustic signatures (AS(A), AS(B)) of the plurality of water appliances (20A-20H).

5. The method of any of the preceding claims, wherein the step of registering the composite acoustic pattern (AP(AB)) is preceded by a step of identifying a first water-consuming water appliance based on an acoustic pattern (AP(A), AP(B)) registered by the acoustic sensor (30) during water consumption by the first water-consuming water appliance and the acoustic signature (AS(A), AS(B)) of the first water-consuming water appliance, the step of identifying individual water-consuming water appliances among the multiple water appliances (20A-20H) further comprising
- identifying at least a second water-consuming water appliance among the multiple water appliances (20A-20H) based on a relationship between the composite acoustic pattern (AP(AB)) and the acoustic signature (AS(A), AS(B)) of the first water-consuming water appliance.

6. The method of any of the preceding claims, wherein the step of registering the composite acoustic pattern (AP(AB)) is followed by a step of identifying a first water-consuming water appliance based on an acoustic pattern (AP(A), AP(B)) registered by the acoustic sensor (30) during water consumption by the first water-consuming water appliance and the acoustic signature (AS(A), AS(B)) of the first water-consuming water appliance, the step of identifying individual water-consuming water appliances (20A-20H) among the multiple water appliances (20A-20H) further comprising
- identifying at least a second water-consuming water appliance among the multiple water appliances (20A-20H) based on a relationship between the composite acoustic pattern (AP(AB)) and the acoustic signature (AS(A), AS(B)) of the first water-consuming appliance.

7. The method of any of the preceding claims, comprising
- determining a water volume consumed by each individual water-consuming appliance of the multiple water appliances (20A-20H) based on a relationship between an energy content of the at least one prominent frequency (f_{P1}(A)-f_{P4}(A), f_{P1}(B)-f_{P4}(B)) of the acoustic signature (AS(A), AS(B)) of the water appliance and an energy content of a corresponding frequency in the composite acoustic pattern (AP(AB)).

8. The method of claim 7, wherein the water volume is determined from said relationship and a signature flow related to the energy content of the at least one prominent frequency (f_{P1}(A)-f_{P4}(A), f_{P1}(B)-f_{P4}(B)) of the acoustic signature (AS(A), AS(B)).

9. The method of claim 7, wherein the acoustic signature (AS(A), AS(B)) of each water appliance of the plurality of water appliances (20A-20H) is determined based on an acoustic pattern (AP(A), AP(B)) caused by water consumption of the water appliance at a well-defined calibration flow rate, the water volume consumed by each individual water-consuming water appliance of the multiple water appliances (20A-20H) being determined based on said calibration flow and a relationship between an energy content of the at least one prominent frequency (f_{P1}(A)-f_{P4}(A), f_{P1}(B)-f_{P4}(B)) of the acoustic signature (AS(A), AS(B)) of the water appliance and an energy content of a corresponding frequency in the composite acoustic pattern (AP(AB)).

10. A computer program comprising computer-readable instructions which, when executed by at least one processor (303, 403) of a system (1) for monitoring utilization of individual water appliances (20A-20H) of a common water distribution system (20), causes the at least one processor to perform the steps of:
- determining, during a calibration process, an acoustic signature (AS(A), AS(B)) of each of a plurality of water appliances (20A-20H) in the common water distribution system (20) by, for each of the plurality of water appliances (20A-20H):
i) receiving an acoustic pattern (AP(A), AP(B)) caused by water consumption of the water appliance, registered by an acoustic sensor (30) attached to an outside of a pipe (22) of the common water distribution system (20);
ii) identifying at least a first prominent frequency (f_{P1}(A)-f_{P4}(A), f_{P1}(B)-f_{P4}(B)) of the acoustic pattern (AP(A), AP(B)) by applying a signal processing algorithm to the acoustic pattern (AP(A), AP(B)), and
iii) defining the acoustic signature (AS(A), AS(B)) of the water appliance as a frequency signature comprising the at least first prominent frequency (f_{P1}(A)-f_{P4}(A), f_{P1}(B)-f_{P4}(B)) of the acoustic pattern (AP(A), AP(B));
- receiving a composite acoustic pattern (AP(AB)) caused by simultaneous water consumption of multiple water appliances (20A-20H) of said plurality of water appliances (20A-20H), registered by the acoustic sensor (30) during simultaneous water consumption of the multiple water appliances (20A-20H), and
- identifying individual water-consuming water appliances among the multiple water appliances (20A-20H) by comparing the composite acoustic pattern (AP(AB)) with the acoustic signatures (AS(A), AS(B)) of the plurality of water appliances (20A-20H),
wherein the individual water-consuming water appliances (20A-20H) are identified by identifying a plurality of prominent frequencies (f_{P1}(AB)-f_{P4}(AB)) in the composite acoustic pattern (AP(AB)), and comparing the identified prominent frequencies (f_{P1}(AB)-f_{P4}(AB)) of the composite acoustic pattern (AP(AB)) with the prominent frequencies (f_{P1}(A)-f_{P4}(A), f_{P1}(B)-f_{P4}(B)) of the acoustic signatures (AS(A), AS(B)) of the plurality of water appliances (20A-20H), and
wherein step ii) involves identification of a plurality of prominent frequencies (f_{P1}(A)-f_{P4}(A), f_{P1}(B)-f_{P4}(B)) of the acoustic pattern (AP(A), AP(B)) and step iii) involves definition of the acoustic signature (AS(A), AS(B)) of the water appliance (20A-20H) as a frequency signature comprising the plurality of identified prominent frequencies (f_{P1}(A)-f_{P4}(A), f_{P1}(B)-f_{P4}(B)) of the acoustic pattern (AP(A), AP(B)),
the instructions further causing the at least one processor (303, 403) to perform the following steps during the calibration process:
- comparing the acoustic signature (AS(A), AS(B)) of a first water appliance with the acoustic signature (AS(A), AS(B)) of at least a second water appliance, and
- adapting the signal processing algorithm and repeating step ii) for the first water appliance until at least a first unique prominent frequency that is different than the prominent frequencies of the acoustic signature (AS(A), AS(B)) of the at least second water appliance is identified in the acoustic pattern (AP(A), AP(B)) of the first water appliance.

11. A system (1) for monitoring utilization of individual water appliances (20A-20H) of a common water distribution system (20), the system comprises a acoustic sensor (30) attached to an outside of a pipe (22) of the common water distribution system (20), and at least one processor (303, 403) operatively coupled to the acoustic sensor (30) and configured to:
- determine, during a calibration process, an acoustic signature (AS(A), AS(B)) of each of the plurality of water appliances (20A-20H) in the common water distribution system (20) by, for each of the plurality of water appliances (20A-20H):
i) receiving an acoustic pattern (AP(A), AP(B)) caused by water consumption of the water appliance, registered by the acoustic sensor (30);
ii) identifying at least a first prominent frequency (f_{P1}(A)-f_{P4}(A), f_{P1}(B)-f_{P4}(B)) of the acoustic pattern (AP(A), AP(B)) by applying a signal processing algorithm to the acoustic pattern (AP(A), AP(B)), and
iii) defining the acoustic signature (AS(A), AS(B)) of the water appliance as a frequency signature comprising the at least first prominent frequency (f_{P1}(A)-f_{P4}(A), f_{P1}(B)-f_{P4}(B)) of the acoustic pattern (AP(A), AP(B));
- receive a composite acoustic pattern (AP(AB)) caused by simultaneous water consumption of multiple water appliances of said plurality of water appliances (20A-20H), registered by the acoustic sensor (30) during simultaneous water consumption of the multiple water appliances (20A-20H), and
- identify individual water-consuming water appliances among the multiple water appliances (20A-20H) by comparing the composite acoustic pattern (AP(AB)) with the acoustic signatures (AS(A), AS(B)) of the plurality of water appliances (20A-20H), wherein the at least one processor (303, 403) is configured to identify the individual water-consuming water appliances (20A-20H) by identifying a plurality of prominent frequencies (f_{P1}(AB)-f_{P4}(AB)) in the composite acoustic pattern (AP(AB)), and comparing the identified prominent frequencies of the composite acoustic pattern (AP(AB)) with the prominent frequencies (f_{P1}(A)-f_{P4}(A), f_{P1}(B)-f_{P4}(B)) of the acoustic signatures (AS(A), AS(B)) of the plurality of water appliances (20A-20H), and, wherein step ii) involves identification of a plurality of prominent frequencies (f_{P1}(A)-f_{P4}(A), f_{P1}(B)-f_{P4}(B)) of the acoustic pattern (AP(A), AP(B)) and step iii) involves definition of the acoustic signature (AS(A), AS(B)) of the water appliance as a frequency signature comprising the plurality of identified prominent frequencies (f_{P1}(A)-f_{P4}(A), f_{P1}(B)-f_{P4}(B)) of the acoustic pattern (AP(A), AP(B)),
wherein the at least one processor (303, 403) is configured, during the calibration process, to:
- compare the acoustic signature (AS(A), AS(B)) of a first water appliance with the acoustic signature (AS(A), AS(B)) of at least a second water appliance, and
- adapt the signal processing algorithm and repeat step ii) for the first water appliance until at least a first unique prominent frequency that is different than the prominent frequencies of the acoustic signature (AS(A), AS(B)) of the at least second water appliance is identified in the acoustic pattern (AP(A), AP(B)) of the first water appliance.

12. The system (1) of claim 11, wherein the at least one processor (303, 403) is configured to adapt the signal processing algorithm in order to:
a) identify, in addition to the plurality of prominent frequencies (f_{P1}(A)-f_{P4}(A), f_{P1}(B)-f_{P4}(B)) of the acoustic pattern (AP(A), AP(B)) of the first water appliance, an additional prominent frequency of the acoustic pattern (AP(A), AP(B)) of the first water appliance;
b) compare the additional prominent frequency with the plurality of prominent frequencies of the acoustic signature (AS(A), AS(B)) of the at least second water appliance, and
c) repeat steps a) and b) until there is at least one identified prominent frequency of the acoustic pattern (AP(A), AP(B)) of the first water appliance that is different than the prominent frequencies of the acoustic signature (AS(A), AS(B)) of the at least second water appliance.

13. The system (1) of claim 11, wherein the identification of the plurality of prominent frequencies of the acoustic pattern (AP(A), AP(B)) involves identification of a plurality of prominent frequencies that are spaced apart in the frequency domain by at least a predefined minimum bandwidth, the at least one processor being configured to adapt the signal processing algorithm in order to increase a resolution of the signal processing algorithm by reducing the minimum bandwidth.

## Patentansprüche

1. Verfahren zum Überwachen der Verwendung einzelner Wassergeräte (20A-20H) eines gemeinsamen Wasserverteilungssystems (20), wobei das Verfahren Folgendes umfasst
- Bestimmen (S1), während eines Kalibrierungsprozesses, einer akustischen Signatur (AS(A), AS(B)) eines jeden einer Mehrzahl von Wassergeräten (20A-20H) in dem gemeinsamen Wasserverteilungssystem (20), durch, für jedes der Mehrzahl von Wassergeräten (20A-20H):
i) Registrieren (S1 i), mit einem akustischen Sensor (30), der an einer Außenseite eines Rohrs (22) des gemeinsamen Wasserverteilungssystems (20) angebracht ist, eines akustischen Musters (AP(A), AP(B)), das von einem Wasserverbrauch des Wassergeräts (20A-20H) verursacht wird;
ii) Identifizieren (S1 ii) mindestens einer ersten markanten Frequenz (f_{P1}(A)-f_{P4}(A), f_{P1}(B)-f_{P4}(B)) des akustischen Musters (AP(A), AP(B)) durch Anwenden eines Signalverarbeitungsalgorithmus auf das akustische Muster (AP(A), AP(B)), und
iii) Definieren (S1 iii) der akustischen Signatur (AS(A), AS(B)) des Wassergeräts (20A-20H) als eine Frequenzsignatur, welche die mindestens erste markante Frequenz (f_{P1}(A)-f_{P4}(A), f_{P1}(B)-f_{P4}(B)) des akustischen Musters (AP(A), AP(B)) umfasst;
- Registrieren (S2), mit dem akustischen Sensor (30) während eines gleichzeitigen Wasserverbrauchs durch mehrere Wassergeräte (20A-20H) der Mehrzahl von Wassergeräten (20A-20H), eines zusammengesetzten akustischen Musters (AP(AB)), das durch den gleichzeitigen Wasserverbrauch der mehreren Wassergeräte (20A-20H) verursacht wird, und
- Identifizieren (S3) einzelner wasserverbrauchender Wassergeräte (20A-20H) unter den mehreren Wassergeräten (20A-20H) durch Vergleichen des zusammengesetzten akustischen Musters mit den akustischen Signaturen (AS(A), AS(B)) der Mehrzahl von Wassergeräten (20A-20H),
wobei die einzelnen wasserverbrauchenden Wassergeräte (20A-20H) durch Identifizieren einer Mehrzahl von markanten Frequenzen (f_{P1}(AB)-f_{P4}(AB)) in dem zusammengesetzten akustischen Muster (AP(AB)) und Vergleichen der identifizierten markanten Frequenzen (f_{P1}(AB)-f_{P4}(AB)) des zusammengesetzten akustischen Musters (AP(AB)) mit den markanten Frequenzen (f_{P1}(A)-f_{P4}(A), f_{P1}(B)-f_{P4}(B)) der akustischen Signaturen (AS(A), AS(B)) der Mehrzahl von Wassergeräten (20A-20H) identifiziert werden, und
wobei Schritt ii) eine Identifikation einer Mehrzahl von markanten Frequenzen (f_{P1}(A)-f_{P4}(A), f_{P1}(B)-f_{P4}(B)) des akustischen Musters (AP(A), AP(B)) beinhaltet und Schritt iii) eine Definition der akustischen Signatur (AS(A), AS(B)) des Wassergeräts (20A-20H) als eine Frequenzsignatur, welche die Mehrzahl von identifizierten markanten Frequenzen (f_{P1}(A)-f_{P4}(A), f_{P1}(B)-f_{P4}(B)) des akustischen Musters (AP(A), AP(B)) umfasst, beinhaltet,
wobei der Kalibrierungsprozess ferner Folgendes umfasst:
- Vergleichen der akustischen Signatur (AS(A), AS(B)) eines ersten Wassergeräts mit der akustischen Signatur (AS(A), AS(B)) mindestens eines zweiten Wassergeräts, und
- Anpassen des Signalverarbeitungsalgorithmus und Wiederholen von Schritt ii) für das erste Wassergerät, bis mindestens eine erste einzigartige markante Frequenz, die sich von den markanten Frequenzen der akustischen Signatur (AS(A), AS(B)) des mindestens zweiten Wassergeräts unterscheidet, in dem akustischen Muster (AP(A), AP(B)) des ersten Wassergeräts identifiziert ist.

2. Verfahren nach Anspruch 1, wobei der Signalverarbeitungsalgorithmus zu Folgendem angepasst ist:
a) Identifizieren, zusätzlich zu der Mehrzahl von markanten Frequenzen (f_{P1}(A)-f_{P4}(A), f_{P1}(B)-f_{P4}(B)) des akustischen Musters (AP(A), AP(B)) des ersten Wassergeräts (20A-20H), einer zusätzlichen markanten Frequenz des akustischen Musters (AP(A), AP(B)) des ersten Wassergeräts;
b) Vergleichen der zusätzlichen markanten Frequenz mit den markanten Frequenzen der akustischen Signatur (AS(A), AS(B)) des mindestens zweiten Wassergeräts, und
c) Wiederholen der Schritte a) und b), bis es mindestens eine identifizierte markante Frequenz des akustischen Musters (AP(A), AP(B)) des ersten Wassergeräts gibt, die sich von den markanten Frequenzen der akustischen Signatur (AS(A), AS(B)) des mindestens zweiten Wassergeräts unterscheidet.

3. Verfahren nach Anspruch 1, wobei der Schritt des Identifizierens der Mehrzahl von markanten Frequenzen (f_{P1}(A)-f_{P4}(A), f_{P1}(B)-f_{P4}(B)) des akustischen Musters (AP(A), AP(B)) eine Identifikation einer Mehrzahl von markanten Frequenzen beinhaltet, die in dem Frequenzbereich um mindestens eine vordefinierte Mindestbandbreite beabstandet sind, wobei der Schritt des Anpassens des Signalverarbeitungsalgorithmus Erhöhen einer Auflösung des Signalverarbeitungsalgorithmus durch Reduzieren der Mindestbandbreite umfasst.

4. Verfahren nach einem der vorhergehenden Ansprüche, ferner umfassend:
- Identifizieren oder Verifizieren der Identifikation der einzelnen wasserverbrauchenden Wassergeräte (20A-20H) durch Vergleichen eines Energiegehalts der identifizierten markanten Frequenzen (f_{P1}(AB)-f_{P4}(AB)) in dem zusammengesetzten akustischen Muster (AP(AB)) mit einem Energiegehalt der markanten Frequenzen (f_{P1}(A)-f_{P4}(A), f_{P1}(B)-f_{P4}(B)) der akustischen Signaturen (AS(A), AS(B)) der Mehrzahl von Wassergeräten (20A-20H).

5. Verfahren nach einem der vorhergehenden Ansprüche, wobei dem Schritt des Registrierens des zusammengesetzten akustischen Musters (AP(AB)) ein Schritt zum Identifizieren eines ersten wasserverbrauchenden Wassergeräts basierend auf einem akustischen Muster (AP(A), AP(B)), das von dem akustischen Sensor (30) während des Wasserverbrauchs durch das erste wasserverbrauchende Wassergerät registriert wird, und der akustischen Signatur (AS(A), AS(B)) des ersten wasserverbrauchenden Wassergeräts vorausgeht, wobei der Schritt des Identifizierens einzelner wasserverbrauchender Wassergeräte unter den mehreren Wassergeräten (20A-20H) ferner Folgendes umfasst
- Identifizieren mindestens eines zweiten wasserverbrauchenden Wassergeräts unter den mehreren Wassergeräten (20A-20H) basierend auf einer Beziehung zwischen dem zusammengesetzten akustischen Muster (AP(AB)) und der akustischen Signatur (AS(A), AS(B)) des ersten wasserverbrauchenden Wassergeräts.

6. Verfahren nach einem der vorhergehenden Ansprüche, wobei dem Schritt des Registrierens des zusammengesetzten akustischen Musters (AP(AB)) ein Schritt zum Identifizieren eines ersten wasserverbrauchenden Wassergeräts basierend auf einem akustischen Muster (AP(A), AP(B)), das von dem akustischen Sensor (30) während des Wasserverbrauchs durch das erste wasserverbrauchende Wassergerät registriert wird, und der akustischen Signatur (AS(A), AS(B)) des ersten wasserverbrauchenden Wassergeräts folgt, wobei der Schritt des Identifizierens einzelner wasserverbrauchender Wassergeräte (20A-20H) unter den mehreren Wassergeräten (20A-20H) ferner Folgendes umfasst
- Identifizieren mindestens eines zweiten wasserverbrauchenden Wassergeräts unter den mehreren Wassergeräten (20A-20H) basierend auf einer Beziehung zwischen dem zusammengesetzten akustischen Muster (AP(AB)) und der akustischen Signatur (AS(A), AS(B)) des ersten wasserverbrauchenden Geräts.

7. Verfahren nach einem der vorhergehenden Ansprüche, umfassend
- Bestimmen einer Wassermenge, die von jedem einzelnen wasserverbrauchenden Gerät der mehreren Wassergeräte (20A-20H) verbraucht wird, basierend auf einer Beziehung zwischen einem Energiegehalt der mindestens einen markanten Frequenz (f_{P1}(A)-f_{P4}(A), f_{P1}(B)-f_{P4}(B)) der akustischen Signatur (AS(A), AS(B)) des Wassergeräts und einem Energiegehalt einer entsprechenden Frequenz in dem zusammengesetzten akustischen Muster (AP(AB)).

8. Verfahren nach Anspruch 7, wobei die Wassermenge bestimmt wird aus der Beziehung und einem Signaturdurchfluss in Bezug auf den Energiegehalt der mindestens einen markanten Frequenz (f_{P1}(A)-f_{P4}(A), f_{P1}(B)-f_{P4}(B)) der akustischen Signatur (AS(A), AS(B)).

9. Verfahren nach Anspruch 7, wobei die akustische Signatur (AS(A), AS(B)) eines jeden Wassergeräts der Mehrzahl von Wassergeräten (20A-20H) bestimmt wird basierend auf einem akustischen Muster (AP(A), AP(B)), das verursacht wird vom Wasserverbrauch des Wassergeräts bei einer genau definierten Kalibrierungsdurchflussrate, wobei die Wassermenge, die von jedem einzelnen wasserverbrauchenden Wassergerät der mehreren Wassergeräte (20A-20H) verbraucht wird, bestimmt wird basierend auf dem Kalibrierungsdurchfluss und einer Beziehung zwischen einem Energiegehalt der mindestens einen markanten Frequenz (f_{P1}(A)-f_{P4}(A), f_{P1}(B)-f_{P4}(B)) der akustischen Signatur (AS(A), AS(B)) des Wassergeräts und einem Energiegehalt einer entsprechenden Frequenz in dem zusammengesetzten akustischen Muster (AP(AB)).

10. Computerprogramm, umfassend computerlesbare Anweisungen, das bei Ausführung durch mindestens einen Prozessor (303, 403) eines Systems (1) zum Überwachen der Verwendung einzelner Wassergeräte (20A-20H) eines gemeinsamen Wasserverteilungssystems (20) den mindestens einen Prozessor dazu veranlasst, die folgenden Schritte durchzuführen:
- Bestimmen, während eines Kalibrierungsprozesses, einer akustischen Signatur (AS(A), AS(B)) eines jeden einer Mehrzahl von Wassergeräten (20A-20H) in dem gemeinsamen Wasserverteilungssystem (20), durch, für jedes der Mehrzahl von Wassergeräten (20A-20H):
i) Empfangen eines akustischen Musters (AP(A), AP(B)), verursacht durch einen Wasserverbrauch des Wassergeräts, der von einem akustischen Sensor (30), der an einer Außenseite eines Rohrs (22) des gemeinsamen Wasserverteilungssystems (20) angebracht ist, registriert wird;
ii) Identifizieren mindestens einer ersten markanten Frequenz (f_{P1}(A)-f_{P4}(A), f_{P1}(B)-f_{P4}(B)) des akustischen Musters (AP(A), AP(B)) durch Anwenden eines Signalverarbeitungsalgorithmus auf das akustische Muster (AP(A), AP(B)), und
iii) Definieren der akustischen Signatur (AS(A), AS(B)) des Wassergeräts als eine Frequenzsignatur, welche die mindestens erste markante Frequenz (f_{P1}(A)-f_{P4}(A), f_{P1}(B)-f_{P4}(B)) des akustischen Musters (AP(A), AP(B)) umfasst;
- Empfangen eines zusammengesetzten akustischen Musters (AP(AB)), verursacht durch einen gleichzeitigen Wasserverbrauch mehrerer Wassergeräte (20A-20H) der Mehrzahl von Wassergeräten (20A-20H), der von dem akustischen Sensor (30) während des gleichzeitigen Wasserverbrauchs der mehreren Wassergeräte (20A-20H) registriert wird, und
- Identifizieren einzelner wasserverbrauchender Wassergeräte unter den mehreren Wassergeräten (20A-20H) durch Vergleichen des zusammengesetzten akustischen Musters (AP(AB)) mit den akustischen Signaturen (AS(A), AS(B)) der Mehrzahl von Wassergeräten (20A-20H), wobei die einzelnen wasserverbrauchenden Wassergeräte (20A-20H) durch Identifizieren einer Mehrzahl von markanten Frequenzen (f_{P1}(AB)-f_{P4}(AB)) in dem zusammengesetzten akustischen Muster (AP(AB)) und Vergleichen der identifizierten markanten Frequenzen (f_{P1}(AB)-f_{P4}(AB)) des zusammengesetzten akustischen Musters (AP(AB)) mit den markanten Frequenzen (f_{P1}(A)-f_{P4}(A), f_{P1}(B)-f_{P4}(B)) der akustischen Signaturen (AS(A), AS(B)) der Mehrzahl von Wassergeräten (20A-20H) identifiziert werden, und
wobei Schritt ii) eine Identifikation einer Mehrzahl von markanten Frequenzen (f_{P1}(A)-f_{P4}(A), f_{P1}(B)-f_{P4}(B)) des akustischen Musters (AP(A), AP(B)) beinhaltet und Schritt iii) eine Definition der akustischen Signatur (AS(A), AS(B)) des Wassergeräts (20A-20H) als eine Frequenzsignatur, welche die Mehrzahl von identifizierten markanten Frequenzen (f_{P1}(A)-f_{P4}(A), f_{P1}(B)-f_{P4}(B)) des akustischen Musters (AP(A), AP(B)) umfasst, beinhaltet,
wobei die Anweisungen den mindestens einen Prozessor (303, 403) ferner dazu veranlassen, die folgenden Schritte während des Kalibrierungsprozesses durchzuführen:
- Vergleichen der akustischen Signatur (AS(A), AS(B)) eines ersten Wassergeräts mit der akustischen Signatur (AS(A), AS(B)) mindestens eines zweiten Wassergeräts, und
- Anpassen des Signalverarbeitungsalgorithmus und Wiederholen von Schritt ii) für das erste Wassergerät, bis mindestens eine erste einzigartige markante Frequenz, die sich von den markanten Frequenzen der akustischen Signatur (AS(A), AS(B)) des mindestens zweiten Wassergeräts unterscheidet, in dem akustischen Muster (AP(A), AP(B)) des ersten Wassergeräts identifiziert ist.

11. System (1) zum Überwachen der Verwendung einzelner Wassergeräte (20A-20H) eines gemeinsamen Wasserverteilungssystems (20), wobei das System einen akustischen Sensor (30), der an einer Außenseite eines Rohrs (22) des gemeinsamen Wasserverteilungssystems (20) angebracht ist, und mindestens einen Prozessor (303, 403) umfasst, der an den akustischen Sensor (30) wirkgekoppelt und zu Folgendem konfiguriert ist:
- Bestimmen, während eines Kalibrierungsprozesses, einer akustischen Signatur (AS(A), AS(B)) eines jeden der Mehrzahl von Wassergeräten (20A-20H) in dem gemeinsamen Wasserverteilungssystem (20), durch, für jedes der Mehrzahl von Wassergeräten (20A-20H):
i) Empfangen eines akustischen Musters (AP(A), AP(B)), verursacht durch einen Wasserverbrauch des Wassergeräts, der von dem akustischen Sensor (30) registriert wird;
ii) Identifizieren mindestens einer ersten markanten Frequenz (f_{P1}(A)-f_{P4}(A), f_{P1}(B)-f_{P4}(B)) des akustischen Musters (AP(A), AP(B)) durch Anwenden eines Signalverarbeitungsalgorithmus auf das akustische Muster (AP(A), AP(B)), und
iii) Definieren der akustischen Signatur (AS(A), AS(B)) des Wassergeräts als eine Frequenzsignatur, welche die mindestens erste markante Frequenz (f_{P1}(A)-f_{P4}(A), f_{P1}(B)-f_{P4}(B)) des akustischen Musters (AP(A), AP(B)) umfasst;
- Empfangen eines zusammengesetzten akustischen Musters (AP(AB)), verursacht durch einen gleichzeitigen Wasserverbrauch mehrerer Wassergeräte der Mehrzahl von Wassergeräten (20A-20H), der von dem akustischen Sensor (30) während des gleichzeitigen Wasserverbrauchs der mehreren Wassergeräte (20A-20H) registriert wird, und
- Identifizieren einzelner wasserverbrauchender Wassergeräte unter den mehreren Wassergeräten (20A-20H) durch Vergleichen des zusammengesetzten akustischen Musters (AP(AB)) mit den akustischen Signaturen (AS(A), AS(B)) der Mehrzahl von Wassergeräten (20A-20H), wobei der mindestens eine Prozessor (303, 403) dazu konfiguriert ist, die einzelnen wasserverbrauchenden Wassergeräte (20A-20H) durch Identifizieren einer Mehrzahl von markanten Frequenzen (f_{P1}(AB)-f_{P4}(AB)) in dem zusammengesetzten akustischen Muster (AP(AB)) und Vergleichen der identifizierten markanten Frequenzen des zusammengesetzten akustischen Musters (AP(AB)) mit den markanten Frequenzen (f_{P1}(A)-f_{P4}(A), f_{P1}(B)-f_{P4}(B)) der akustischen Signaturen (AS(A), AS(B)) der Mehrzahl von Wassergeräten (20A-20H) zu identifizieren und wobei Schritt ii) eine Identifikation einer Mehrzahl von markanten Frequenzen (f_{P1}(A)-f_{P4}(A), f_{P1}(B)-f_{P4}(B)) des akustischen Musters (AP(A), AP(B)) beinhaltet und Schritt iii) eine Definition der akustischen Signatur (AS(A), AS(B)) des Wassergeräts als eine Frequenzsignatur, welche die Mehrzahl von identifizierten markanten Frequenzen (f_{P1}(A)-f_{P4}(A), f_{P1}(B)-f_{P4}(B)) des akustischen Musters (AP(A), AP(B)) umfasst, beinhaltet,
wobei der mindestens eine Prozessor (303, 403) während des Kalibrierungsprozesses zu Folgendem konfiguriert ist:
- Vergleichen der akustischen Signatur (AS(A), AS(B)) eines ersten Wassergeräts mit der akustischen Signatur (AS(A), AS(B)) mindestens eines zweiten Wassergeräts, und
- Anpassen des Signalverarbeitungsalgorithmus und Wiederholen von Schritt ii) für das erste Wassergerät, bis mindestens eine erste einzigartige markante Frequenz, die sich von den markanten Frequenzen der akustischen Signatur (AS(A), AS(B)) des mindestens zweiten Wassergeräts unterscheidet, in dem akustischen Muster (AP(A), AP(B)) des ersten Wassergeräts identifiziert ist.

12. System (1) nach Anspruch 11, wobei der mindestens eine Prozessor (303, 403) dazu konfiguriert ist, den Signalverarbeitungsalgorithmus zu Folgendem anzupassen:
a) Identifizieren, zusätzlich zu der Mehrzahl von markanten Frequenzen (f_{P1}(A)-f_{P4}(A), f_{P1}(B)-f_{P4}(B)) des akustischen Musters (AP(A), AP(B)) des ersten Wassergeräts, einer zusätzlichen markanten Frequenz des akustischen Musters (AP(A), AP(B)) des ersten Wassergeräts;
b) Vergleichen der zusätzlichen markanten Frequenz mit der Mehrzahl von markanten Frequenzen der akustischen Signatur (AS(A), AS(B)) des mindestens zweiten Wassergeräts, und
c) Wiederholen der Schritte a) und b), bis es mindestens eine identifizierte markante Frequenz des akustischen Musters (AP(A), AP(B)) des ersten Wassergeräts gibt, die sich von den markanten Frequenzen der akustischen Signatur (AS(A), AS(B)) des mindestens zweiten Wassergeräts unterscheidet.

13. System (1) nach Anspruch 11, wobei die Identifikation der Mehrzahl von markanten Frequenzen des akustischen Musters (AP(A), AP(B)) eine Identifikation einer Mehrzahl von markanten Frequenzen beinhaltet, die in dem Frequenzbereich um mindestens eine vordefinierte Mindestbandbreite beabstandet sind, wobei der mindestens eine Prozessor dazu konfiguriert ist, den Signalverarbeitungsalgorithmus anzupassen, um eine Auflösung des Signalverarbeitungsalgorithmus durch Reduzieren der Mindestbandbreite zu erhöhen.

## Revendications

1. Procédé pour surveiller l'utilisation d'appareils individuels d'alimentation en eau (20A-20H) d'un système commun de distribution d'eau (20), le procédé comprend
- la détermination (S1), pendant un processus d'étalonnage, d'une signature acoustique (AS(A), AS(B)) de chacun d'une pluralité d'appareils d'alimentation en eau (20A-20H) dans le système commun de distribution d'eau (20) par, pour chacun de la pluralité d'appareils d'alimentation en eau (20A-20H) :
i) l'enregistrement (S1 i), avec un capteur acoustique (30) attaché à un extérieur d'un tuyau (22) du système commun de distribution d'eau (20), d'un motif acoustique (AP(A), AP(B)) provoqué par une consommation d'eau de l'appareil d'alimentation en eau (20A-20H) ;
ii) l'identification (S1 ii) d'au moins une première fréquence proéminente (f_{P1}(A)-f_{P4}(A), f_{P1}(B)-f_{P4}(B)) du motif acoustique (AP(A), AP(B)) en appliquant un algorithme de traitement de signal au motif acoustique (AP(A), AP(B)), et
iii) la définition (S1 iii) de la signature acoustique (AS(A), AS(B)) de l'appareil d'alimentation en eau (20A-20H) comme une signature de fréquence comprenant l'au moins première fréquence proéminente (f_{P1}(A)-f_{P4}(A), f_{P1}(B)-f_{P4}(B)) du motif acoustique (AP(A), AP(B)) ;
- l'enregistrement (S2), avec le capteur acoustique (30) pendant une consommation d'eau simultanée par de multiples appareils d'alimentation en eau (20A-20H) de ladite pluralité d'appareils d'alimentation en eau (20A-20H), d'un motif acoustique composite (AP(AB)) provoqué par la consommation d'eau simultanée des multiples appareils d'alimentation en eau (20A-20H), et
- l'identification (S3) d'appareils individuels d'alimentation en eau consommant de l'eau (20A-20H) parmi les multiples appareils d'alimentation en eau (20A-20H) en comparant le motif acoustique composite avec les signatures acoustiques (AS(A), AS(B)) de la pluralité d'appareils d'alimentation en eau (20A-20H),
dans lequel les appareils individuels d'alimentation en eau consommant de l'eau (20A-20H) sont identifiés en identifiant une pluralité de fréquences proéminentes (f_{P1}(AB)-f_{P4}(AB)) dans le motif acoustique composite (AP(AB)), et en comparant les fréquences proéminentes identifiées (f_{P1}(AB)-f_{P4}(AB)) du motif acoustique composite (AP(AB)) avec les fréquences proéminentes (f_{P1}(A)-f_{P4}(A), f_{P1}(B)-f_{P4}(B)) des signatures acoustiques (AS(A), AS(B)) de la pluralité d'appareils d'alimentation en eau (20A-20H), et
dans lequel l'étape ii) implique l'identification d'une pluralité de fréquences proéminentes (f_{P1}(A)-f_{P4}(A), f_{P1}(B)-f_{P4}(B)) du motif acoustique (AP(A), AP(B)) et l'étape iii) implique la définition de la signature acoustique (AS(A), AS(B)) de l'appareil d'alimentation en eau (20A-20H) comme une signature de fréquence comprenant la pluralité de fréquences proéminentes identifiées (f_{P1}(A)-f_{P4}(A), f_{P1}(B)-f_{P4}(B)) du motif acoustique (AP(A), AP(B)),
le processus d'étalonnage comprenant en outre :
- la comparaison de la signature acoustique (AS(A), AS(B)) d'un premier appareil d'alimentation en eau avec la signature acoustique (AS(A), AS(B)) d'au moins un deuxième appareil d'alimentation en eau, et
- l'adaptation de l'algorithme de traitement de signal et la répétition de l'étape ii) pour le premier appareil d'alimentation en eau jusqu'à ce qu'au moins une première fréquence proéminente unique qui est différente des fréquences proéminentes de la signature acoustique (AS(A), AS(B)) de l'au moins deuxième appareil d'alimentation en eau soit identifiée dans le motif acoustique (AP(A), AP(B)) du premier appareil d'alimentation en eau.

2. Procédé selon la revendication 1, dans lequel l'algorithme de traitement de signal est adapté pour :
a) identifier, en plus de la pluralité de fréquences proéminentes (f_{P1}(A)-f_{P4}(A), f_{P1}(B)-f_{P4}(B)) du motif acoustique (AP(A), AP(B)) du premier appareil d'alimentation en eau (20A-20H), une fréquence proéminente supplémentaire du motif acoustique (AP(A), AP(B)) du premier appareil d'alimentation en eau ;
b) comparer la fréquence proéminente supplémentaire avec les fréquences proéminentes de la signature acoustique (AS(A), AS(B)) de l'au moins deuxième appareil d'alimentation en eau, et
c) répéter les étapes a) et b) jusqu'à ce qu'il y ait au moins une fréquence proéminente identifiée du motif acoustique (AP(A), AP(B)) du premier appareil d'alimentation en eau qui est différente des fréquences proéminentes de la signature acoustique (AS(A), AS(B)) de l'au moins deuxième appareil d'alimentation en eau.

3. Procédé selon la revendication 1, dans lequel l'étape d'identification de la pluralité de fréquences proéminentes (f_{P1}(A)-f_{P4}(A), f_{P1}(B)-f_{P4}(B)) du motif acoustique (AP(A), AP(B)) implique l'identification d'une pluralité de fréquences proéminentes qui sont espacées dans le domaine fréquentiel par au moins une bande passante minimale prédéfinie, l'étape d'adaptation de l'algorithme de traitement de signal comprend l'augmentation d'une résolution de l'algorithme de traitement de signal en réduisant ladite bande passante minimale.

4. Procédé selon l'une quelconque des revendications précédentes, comprenant en outre
- l'identification ou la vérification d'identification des appareils individuels d'alimentation en eau consommant de l'eau (20A-20H) en comparant un contenu énergétique des fréquences proéminentes identifiées (f_{P1}(AB)-f_{P4}(AB)) dans le motif acoustique composite (AP(AB)) avec un contenu énergétique des fréquences proéminentes (f_{P1}(A)-f_{P4}(A), f_{P1}(B)-f_{P4}(B)) des signatures acoustiques (AS(A), AS(B)) de la pluralité d'appareils d'alimentation en eau (20A-20H).

5. Procédé selon l'une quelconque des revendications précédentes, dans lequel l'étape d'enregistrement du motif acoustique composite (AP(AB)) est précédée d'une étape d'identification d'un premier appareil d'alimentation en eau consommant de l'eau sur la base d'un motif acoustique (AP(A), AP(B)) enregistré par le capteur acoustique (30) pendant une consommation d'eau par le premier appareil d'alimentation en eau consommant de l'eau et de la signature acoustique (AS(A), AS(B)) du premier appareil d'alimentation en eau consommant de l'eau, l'étape d'identification d'appareils individuels d'alimentation en eau consommant de l'eau parmi les multiples appareils d'alimentation en eau (20A-20H) comprenant en outre
- l'identification d'au moins un deuxième appareil d'alimentation en eau consommant de l'eau parmi les multiples appareils d'alimentation en eau (20A-20H) sur la base d'une relation entre le motif acoustique composite (AP(AB)) et la signature acoustique (AS(A), AS(B)) du premier appareil d'alimentation en eau consommant de l'eau.

6. Procédé selon l'une quelconque des revendications précédentes, dans lequel l'étape d'enregistrement du motif acoustique composite (AP(AB)) est suivie d'une étape d'identification d'un premier appareil d'alimentation en eau consommant de l'eau sur la base d'un motif acoustique (AP(A), AP(B)) enregistré par le capteur acoustique (30) pendant une consommation d'eau par le premier appareil d'alimentation en eau consommant de l'eau et de la signature acoustique (AS(A), AS(B)) du premier appareil d'alimentation en eau consommant de l'eau, l'étape d'identification d'appareils individuels d'alimentation en eau consommant de l'eau (20A-20H) parmi les multiples appareils d'alimentation en eau (20A-20H) comprenant en outre
- l'identification d'au moins un deuxième appareil d'alimentation en eau consommant de l'eau parmi les multiples appareils d'alimentation en eau (20A-20H) sur la base d'une relation entre le motif acoustique composite (AP(AB)) et la signature acoustique (AS(A), AS(B)) du premier appareil consommant de l'eau.

7. Procédé selon l'une quelconque des revendications précédentes, comprenant
- la détermination d'un volume d'eau consommé par chaque appareil individuel consommant de l'eau des multiples appareils d'alimentation en eau (20A-20H) sur la base d'une relation entre un contenu énergétique de l'au moins une fréquence proéminente (f_{P1}(A)-f_{P4}(A), f_{P1}(B)-f_{P4}(B)) de la signature acoustique (AS(A), AS(B)) de l'appareil d'alimentation en eau et un contenu énergétique d'une fréquence correspondante dans le motif acoustique composite (AP(AB)).

8. Procédé selon la revendication 7, dans lequel le volume d'eau est déterminé à partir de ladite relation et d'un débit de signature lié au contenu énergétique de l'au moins une fréquence proéminente (f_{P1}(A)-f_{P4}(A), f_{P1}(B)-f_{P4}(B)) de la signature acoustique (AS(A), AS(B)).

9. Procédé selon la revendication 7, dans lequel la signature acoustique (AS(A), AS(B)) de chaque appareil d'alimentation en eau de la pluralité d'appareils d'alimentation en eau (20A-20H) est déterminée sur la base d'un motif acoustique (AP(A), AP(B)) provoqué par une consommation d'eau de l'appareil d'alimentation en eau à un débit d'étalonnage bien défini, le volume d'eau consommé par chaque appareil individuel d'alimentation en eau consommant de l'eau des multiples appareils d'alimentation en eau (20A-20H) étant déterminé sur la base dudit débit d'étalonnage et d'une relation entre un contenu énergétique de l'au moins une fréquence proéminente (f_{P1}(A)-f_{P4}(A), f_{P1}(B)-f_{P4}(B)) de la signature acoustique (AS(A), AS(B)) de l'appareil d'alimentation en eau et un contenu énergétique d'une fréquence correspondante dans le motif acoustique composite (AP(AB)).

10. Programme informatique comprenant des instructions lisibles par ordinateur qui, lorsqu'elles sont exécutées par au moins un processeur (303, 403) d'un système (1) pour surveiller l'utilisation d'appareils individuels d'alimentation en eau (20A-20H) d'un système commun de distribution d'eau (20), amènent l'au moins un processeur à réaliser les étapes de :
- la détermination, pendant un processus d'étalonnage, d'une signature acoustique (AS(A), AS(B)) de chacun d'une pluralité d'appareils d'alimentation en eau (20A-20H) dans le système commun de distribution d'eau (20) par, pour chacun de la pluralité d'appareils d'alimentation en eau (20A-20H) :
i) la réception d'un motif acoustique (AP(A), AP(B)) provoqué par une consommation d'eau de l'appareil d'alimentation en eau, enregistré par un capteur acoustique (30) attaché à un extérieur d'un tuyau (22) du système commun de distribution d'eau (20) ;
ii) l'identification d'au moins une première fréquence proéminente (f_{P1}(A)-f_{P4}(A), f_{P1}(B)-f_{P4}(B)) du motif acoustique (AP(A), AP(B)) en appliquant un algorithme de traitement de signal au motif acoustique (AP(A), AP(B)), et
iii) la définition de la signature acoustique (AS(A), AS(B)) de l'appareil d'alimentation en eau comme une signature de fréquence comprenant l'au moins première fréquence proéminente (f_{P1}(A)-f_{P4}(A), f_{P1}(B)-f_{P4}(B)) du motif acoustique (AP(A), AP(B)) ;
- la réception d'un motif acoustique composite (AP(AB)) provoqué par une consommation d'eau simultanée de multiples appareils d'alimentation en eau (20A-20H) de ladite pluralité d'appareils d'alimentation en eau (20A-20H), enregistré par le capteur acoustique (30) pendant une consommation d'eau simultanée des multiples appareils d'alimentation en eau (20A-20H), et
- l'identification d'appareils individuels d'alimentation en eau consommant de l'eau parmi les multiples appareils d'alimentation en eau (20A-20H) en comparant le motif acoustique composite (AP(AB)) avec les signatures acoustiques (AS(A), AS(B)) de la pluralité d'appareils d'alimentation en eau (20A-20H), dans lequel les appareils individuels d'alimentation en eau consommant de l'eau (20A-20H) sont identifiés en identifiant une pluralité de fréquences proéminentes (f_{P1}(AB)-f_{P4}(AB)) dans le motif acoustique composite (AP(AB)), et en comparant les fréquences proéminentes identifiées (f_{P1}(AB)-f_{P4}(AB)) du motif acoustique composite (AP(AB)) avec les fréquences proéminentes (f_{P1}(A)-f_{P4}(A), f_{P1}(B)-f_{P4}(B)) des signatures acoustiques (AS(A), AS(B)) de la pluralité d'appareils d'alimentation en eau (20A-20H), et
dans lequel l'étape ii) implique l'identification d'une pluralité de fréquences proéminentes (f_{P1}(A)-f_{P4}(A), f_{P1}(B)-f_{P4}(B)) du motif acoustique (AP(A), AP(B)) et l'étape iii) implique la définition de la signature acoustique (AS(A), AS(B)) de l'appareil d'alimentation en eau (20A-20H) comme une signature de fréquence comprenant la pluralité de fréquences proéminentes identifiées (f_{P1}(A)-f_{P4}(A), f_{P1}(B)-f_{P4}(B)) du motif acoustique (AP(A), AP(B)),
les instructions amenant en outre l'au moins un processeur (303, 403) à réaliser les étapes suivantes pendant le processus d'étalonnage :
- la comparaison de la signature acoustique (AS(A), AS(B)) d'un premier appareil d'alimentation en eau avec la signature acoustique (AS(A), AS(B)) d'au moins un deuxième appareil d'alimentation en eau, et
- l'adaptation de l'algorithme de traitement de signal et la répétition de l'étape ii) pour le premier appareil d'alimentation en eau jusqu'à ce qu'au moins une première fréquence proéminente unique qui est différente des fréquences proéminentes de la signature acoustique (AS(A), AS(B)) de l'au moins deuxième appareil d'alimentation en eau soit identifiée dans le motif acoustique (AP(A), AP(B)) du premier appareil d'alimentation en eau.

11. Système (1) pour surveiller l'utilisation d'appareils individuels d'alimentation en eau (20A-20H) d'un système commun de distribution d'eau (20), le système comprend un capteur acoustique (30) attaché à un extérieur d'un tuyau (22) du système commun de distribution d'eau (20), et au moins un processeur (303, 403) couplé de manière fonctionnelle au capteur acoustique (30) et configuré pour :
- déterminer, pendant un processus d'étalonnage, une signature acoustique (AS(A), AS(B)) de chacun de la pluralité d'appareils d'alimentation en eau (20A-20H) dans le système commun de distribution d'eau (20) par, pour chacun de la pluralité d'appareils d'alimentation en eau (20A-20H) :
i) la réception d'un motif acoustique (AP(A), AP(B)) provoqué par une consommation d'eau de l'appareil d'alimentation en eau, enregistré par le capteur acoustique (30) ;
ii) l'identification d'au moins une première fréquence proéminente (f_{P1}(A)-f_{P4}(A), f_{P1}(B)-f_{P4}(B)) du motif acoustique (AP(A), AP(B)) en appliquant un algorithme de traitement de signal au motif acoustique (AP(A), AP(B)), et
iii) la définition de la signature acoustique (AS(A), AS(B)) de l'appareil d'alimentation en eau comme une signature de fréquence comprenant l'au moins première fréquence proéminente (f_{P1}(A)-f_{P4}(A), f_{P1}(B)-f_{P4}(B)) du motif acoustique (AP(A), AP(B)) ;
- recevoir un motif acoustique composite (AP(AB)) provoqué par une consommation d'eau simultanée de multiples appareils d'alimentation en eau de ladite pluralité d'appareils d'alimentation en eau (20A-20H), enregistré par le capteur acoustique (30) pendant une consommation d'eau simultanée des multiples appareils d'alimentation en eau (20A-20H), et
- identifier des appareils individuels d'alimentation en eau consommant de l'eau parmi les multiples appareils d'alimentation en eau (20A-20H) en comparant le motif acoustique composite (AP(AB)) avec les signatures acoustiques (AS(A), AS(B)) de la pluralité d'appareils d'alimentation en eau (20A-20H), dans lequel l'au moins un processeur (303, 403) est configuré pour identifier les appareils individuels d'alimentation en eau consommant de l'eau (20A-20H) en identifiant une pluralité de fréquences proéminentes (f_{P1}(AB)-f_{P4}(AB)) dans le motif acoustique composite (AP(AB)), et en comparant les fréquences proéminentes identifiées du motif acoustique composite (AP(AB)) avec les fréquences proéminentes (f_{P1}(A)-f_{P4}(A), f_{P1}(B)-f_{P4}(B)) des signatures acoustiques (AS(A), AS(B)) de la pluralité d'appareils d'alimentation en eau (20A-20H), et, dans lequel l'étape ii) implique l'identification d'une pluralité de fréquences proéminentes (f_{P1}(A)-f_{P4}(A), f_{P1}(B)-f_{P4}(B)) du motif acoustique (AP(A), AP(B)) et l'étape iii) implique la définition de la signature acoustique (AS(A), AS(B)) de l'appareil d'alimentation en eau comme une signature de fréquence comprenant la pluralité de fréquences proéminentes identifiées (f_{P1}(A)-f_{P4}(A), f_{P1}(B)-f_{P4}(B)) du motif acoustique (AP(A), AP(B)),
dans lequel l'au moins un processeur (303, 403) est configuré, pendant le processus d'étalonnage, pour :
- comparer la signature acoustique (AS(A), AS(B)) d'un premier appareil d'alimentation en eau avec la signature acoustique (AS(A), AS(B)) d'au moins un deuxième appareil d'alimentation en eau, et
- adapter l'algorithme de traitement de signal et répéter l'étape ii) pour le premier appareil d'alimentation en eau jusqu'à ce qu'au moins une première fréquence proéminente unique qui est différente des fréquences proéminentes de la signature acoustique (AS(A), AS(B)) de l'au moins deuxième appareil d'alimentation en eau soit identifiée dans le motif acoustique (AP(A), AP(B)) du premier appareil d'alimentation en eau.

12. Système (1) selon la revendication 11, dans lequel l'au moins un processeur (303, 403) est configuré pour adapter l'algorithme de traitement de signal afin de :
a) identifier, en plus de la pluralité de fréquences proéminentes (f_{P1}(A)-f_{P4}(A), f_{P1}(B)-f_{P4}(B)) du motif acoustique (AP(A), AP(B)) du premier appareil d'alimentation en eau, une fréquence proéminente supplémentaire du motif acoustique (AP(A), AP(B)) du premier appareil d'alimentation en eau ;
b) comparer la fréquence proéminente supplémentaire avec la pluralité de fréquences proéminentes de la signature acoustique (AS(A), AS(B)) de l'au moins deuxième appareil d'alimentation en eau, et
c) répéter les étapes a) et b) jusqu'à ce qu'il y ait au moins une fréquence proéminente identifiée du motif acoustique (AP(A), AP(B)) du premier appareil d'alimentation en eau qui est différente des fréquences proéminentes de la signature acoustique (AS(A), AS(B)) de l'au moins deuxième appareil d'alimentation en eau.

13. Système (1) selon la revendication 11, dans lequel l'identification de la pluralité de fréquences proéminentes du motif acoustique (AP(A), AP(B)) implique l'identification d'une pluralité de fréquences proéminentes qui sont espacées dans le domaine fréquentiel par au moins une bande passante minimale prédéfinie, l'au moins un processeur étant configuré pour adapter l'algorithme de traitement de signal afin d'augmenter une résolution de l'algorithme de traitement de signal en réduisant la bande passante minimale.
